# EUROPEAN PATENT APPLICATION

(11) **EP 1 243 946 A2**
(43) Date of publication of application: **25.09.2002**
(21) Application number: 02251920.1
(22) Date of filing: 18.03.2002
(51) Int. Cl.: G01V 15/00

(54) **Extended life electronic tags**

(30) Priority: 20.03.2001 US 277170; 19.12.2001 US 25286
(71) Applicant: Schlumberger Technology B.V., 2514 JG Den Haag (NL); SCHLUMBERGER HOLDINGS LIMITED, Road Town, Tortola (VG); SERVICES PETROLIERS SCHLUMBERGER, 75007 Paris (FR)
(72) Inventor: Kenison, Michael H, Missouri City, Texas 77459 (US); Veneruso, Anthony F, Missouri City, Texas 77459 (US); Sheffield, Randolph J., Missouri City, Texas 77459 (US); Rouse, Matthew, Stafford, Texas 77477 (US)
(74) Representative: Stoole, Brian David (GB)

(57) **Abstract**

The invention comprises a method of packaging an electronic tag. The method includes heating the electronic tag to remove contaminants from an internal volume. The internal volume is filled with a potting material and is hermetically sealed within an outer shell.

The invention also comprises a method of positioning an electronic tag in a tubular member. The method includes positioning an electronic tag in a slot formed in an inner wall of the tubular member. The slot is filled with a potting material that adhesively bonds the electronic tag to the slot.

The invention further includes an electronic tag apparatus. The apparatus comprises a slot formed at a selected azimuthal location in an inner wall of a tubular member. An electronic tag is disposed in the slot. A potting material is disposed in the slot, and the potting material forms a barrier between the electronic tag and the inner wall of the tubular member and adhesively bonds the electronic tag to the slot.

## Description

### Background of the Invention

### Field of the Invention

The subject matter of the present invention relates generally to electronic tags. More specifically, the subject matter of the present invention relates to a method of packaging electronic tags that are required to operate over a long life while exposed to elevated temperatures and other hostile environmental conditions.

### Description of Related Art

Electronic tags provide a wireless means to transmit information. The tags are typically small devices that transmit information when interrogated by an associated reader. Contact between the reader and the tag is not required, and transmission and reception ranges vary depending on, for example, the type and size of the tag. The transmitted and/or received information may be as simple as a unique serial code, or it may comprise extensive data stored and updated by the electronic tag or the reader.

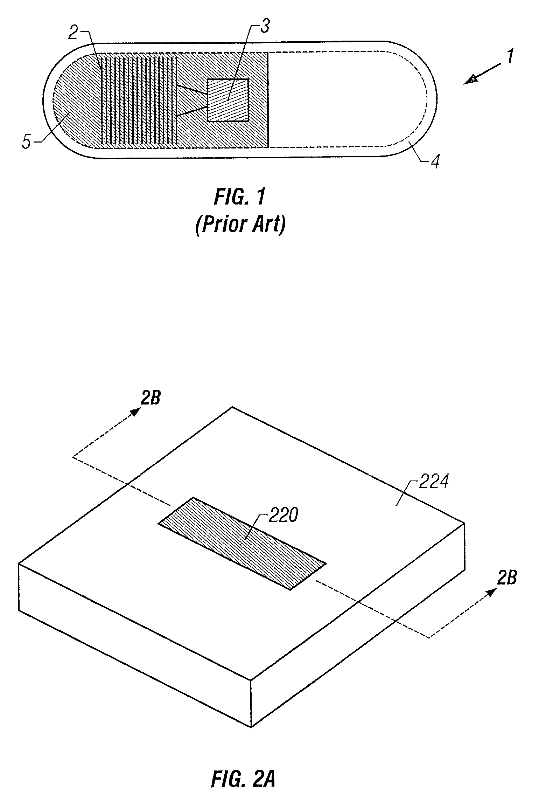

Figure 1 shows a typical electronic tag **1.** The electronic tag **1** comprises an antenna **2** and an integrated circuit **3** housed within an outer shell **4.** The outer shell **4** is adapted to hermetically seal the antenna **2** and the integrated circuit **3** to prevent the influx of any fluids, such as well fluids, or other contaminants. A typical outer shell **4** is preferably both electrically non-conductive and durable. An example of a suitable outer shell **4** is a glass capsule.

A potting material **5** is typically used to secure the antenna **2** and the integrated circuit **3** within the outer shell **4.** In addition to providing a level of mechanical support for the antenna **2** and the integrated circuit **3,** the potting material **5** may also act to adhesively secure the antenna **2** and the integrated circuit **3** in place within the outer shell **4.**

Electronic tags, which may be, for example, radio-frequency transponders, are used in a wide range of applications. In most applications, the tags are operated at low to moderate temperatures except, for example, in some industrial applications that require the electronic tags to be exposed to elevated temperatures for a relatively short time period, typically a few minutes or hours. Examples of high temperature applications using electronic tags include tracking parts in an automotive paint oven, tracking parts and monitoring operations on an engine production line, monitoring operations at a torque converter manufacturing center, and monitoring a temperature cycle in a laundry machine. An example of the use of electronic tags in a laundry system is disclosed in US Patent No. 5,715,555.

Several types of electronic tags used in industrial applications are rated to maximum operational temperatures as high as 140°C and have specified storage temperatures of about 180°C-200°C. Not specified by the manufacturer, however, is a length of time at which the tags may be operated at or stored at these high temperatures. Examples of packaging methods for electronics are disclosed in US Patents No. 3,916,080 and 5,420,757. When packaged with traditional methods, the useful life of commercially available electronic tags may decrease sharply as operational and storage temperatures increase. The decrease in useful life becomes critical in applications requiring exposure of the electronic tags to elevated temperatures for extended periods of time such as, for example, in downhole environments for many days to a few years.

There exists, therefore, a need for packaging electronic tags in a manner that will increase the useful life of electronic tags when they are exposed, for example, to high temperatures and harsh environments for extended periods of time.

### Brief Summary of the Invention

In one aspect, the invention comprises a method of packaging an electronic tag, the method comprising heating the electronic tag so as to remove contaminants from an internal volume therein and filling the internal volume with a potting material which is compatible with and non-corrosive to the electronics. The internal volume is hermetically sealed within an outer shell.

In another aspect, the invention comprises a method of packaging an electronic tag, the method comprising heating the electronic tag so as to remove contaminants from an internal volume therein and filling the internal volume with a potting material. Any remaining volume within the internal volume is filled with an inert gas and the internal volume is hermetically sealed within an outer shell.

In another aspect, the invention comprises a method of packaging an electronic tag, the method comprising heating the electronic tag so as to remove contaminants from an internal volume therein and hermetically sealing the internal volume within an outer shell.

In another aspect, the invention comprises a method of packaging an electronic tag, the method comprising applying a first coating to a circumferential antenna and an electronic tag, the first coating comprising at least one of polytetrafluoroethylene and polyparaxylene. A second coating of a polymer adapted to provide structural support to the circumferential antenna and the electronic tag is applied.

In another aspect, the invention comprises a method of positioning an electronic tag in a tubular member, the method comprising positioning an electronic tag in a slot formed at a selected azimuthal location in an inner wall of the tubular member and filling the slot with a potting material so as to adhesively bond the electronic tag to the slot.

In another aspect, the invention comprises a method of positioning electronic tags in a tubular member, the method comprising positioning an electronic tag in each of a plurality of slots formed at selected azimuthal and axial locations in an inner wall of the tubular member and filling each of the plurality of slots with a potting material so as to adhesively bond each electronic tag to its corresponding slot.

In another aspect, the invention comprises a method of positioning an electronic tag in a tubular member, the method comprising positioning an electronic tag in an undercut slot formed at a selected azimuthal location in an inner wall of the tubular member and filling the undercut slot with a potting material so as to adhesively bond the electronic tag to the undercut slot. The undercut slot is adapted to secure the electronic tag in place after the potting material hardens.

In another aspect, the invention comprises a method of positioning an electronic tag in a tubular member, the method comprising positioning the electronic tag in a slot formed at a selected azimuthal location in an inner wall of the tubular member. A cover is positioned in the slot, and the cover is adapted to substantially cover at least a portion of the electronic tag proximate the inner wall of the tubular member. The slot is filled with a potting material so as to adhesively bond the electronic tag and the cover in the slot.

In another aspect, the invention comprises a method of positioning an electronic tag in a tubular member, the method comprising positioning the electronic tag in an undercut slot formed at a selected azimuthal location in an inner wall of the tubular member. A cover is positioned in the undercut slot, and the cover is adapted to substantially cover at least a portion of the electronic tag proximate the inner wall of the tubular member. The slot is filled with a potting material so as to adhesively bond the electronic tag and the cover to the undercut slot, and the undercut slot is adapted to secure the installed electronic tag in place after the potting material hardens.

In another aspect, the invention comprises a method of positioning an electronic tag in a tubular member, the method comprising positioning a threaded electronic tag in a threaded slot formed at a selected azimuthal location in an inner wall of the tubular member.

In another aspect, the invention comprises a method of positioning an electronic tag in a tubular member, the method comprising positioning a threaded electronic tag in a threaded slot formed at a selected azimuthal location in an inner diameter of the tubular member. A space between the threaded slot and the threaded electronic tag is filled with a potting material, and the potting material is adapted to adhesively bond the threaded electronic tag to the threaded slot.

In another aspect, the invention comprises a method of positioning an electronic tag between casing joints, the method comprising threadedly coupling a casing collar to a first casing joint and threadedly coupling a threaded ring to an internal diameter of the casing collar. The threaded ring comprises an electronic tag. The casing collar is threadedly coupled to a second casing joint.

In another aspect, the invention comprises a method of positioning an electronic tag in a tubular member, the method comprising positioning the electronic tag in a circumferential mounting ring and positioning the circumferential mounting ring proximate an undercut slot formed in an inner wall of the tubular member. The circumferential mounting ring is inserted into the undercut slot by deforming the circumferential mounting ring, and the circumferential mounting ring is adapted to return to a substantially undeformed state within the undercut slot after insertion therein.

In another aspect, the invention comprises a method of positioning an electronic tag between tubular members, the method comprising positioning the electronic tag in a circumferential mounting ring and positioning the circumferential mounting ring proximate an inner surface of a collar. The collar is positioned between adjacent tubular members in the wellbore.

In another aspect, the invention comprises a method of positioning a circumferential electronic tag in a tubular member, the method comprising positioning the circumferential electronic tag proximate an undercut slot formed in an inner wall of the tubular member. The circumferential electronic tag is inserted into the undercut slot by deforming the circumferential electronic tag, and the electronic tag is adapted to return to a substantially undeformed state within the undercut slot after insertion therein.

In another aspect, the invention comprises a method of positioning an electronic tag in a tubular member, the method comprising positioning the electronic tag proximate a circumferential slot formed in an inner wall of the tubular member and radially expanding a diameter of a circumferential mounting ring coupled to the electronic tag so as to secure the electronic tag in the slot.

In another aspect, the invention comprises a method of positioning an electronic tag in a tubular member, the method comprising positioning the electronic tag proximate a circumferential undercut slot formed in an inner wall of the tubular member and radially expanding a diameter of a circumferential mounting ring coupled to the electronic tag so as to secure the electronic tag in the slot.

In another aspect, the invention comprises a method of positioning a circumferential electronic tag in a tubular member, the method comprising compressing a biased tab disposed on the circumferential electronic tag and positioning the electronic tag in a circumferential undercut slot formed in an inner wall of the tubular member. The biased tab is released so as to secure the electronic tag in the undercut slot.

In another aspect, the invention comprises a method of positioning a circumferential electronic tag in a tubular member, the method comprising positioning the circumferential electronic tag in a circumferential undercut slot formed in an inner wall of the tubular member, and the circumferential undercut slot comprises at least one tab formed proximate the inner wall of the tubular member. The at least one tab is deformed so as to secure the electronic tag in the undercut slot.

In another aspect, the invention comprises an electronic tag apparatus, comprising a slot formed at a selected azimuthal location in an inner wall of a tubular member, an electronic tag disposed in the slot, and a potting material disposed in the slot. The potting material is adapted to form a barrier between the electronic tag and the inner wall of the tubular member and to adhesively bond the electronic tag to the slot.

In another aspect, the invention comprises an electronic tag apparatus, comprising a plurality of slots formed at selected azimuthal and axial locations in an inner wall of a tubular member, an electronic tag disposed in each slot, and a potting material disposed in the plurality of slots. The potting material is adapted to form a barrier between each electronic tag and the inner wall of the tubular member and to adhesively bond each electronic tag to its corresponding slot.

In another aspect, the invention comprises an electronic tag apparatus, comprising a circumferential undercut slot formed in an inner wall of a tubular member, an electronic tag disposed in the undercut slot, and a potting material disposed in the undercut slot. The potting material is adapted to form a barrier between the electronic tag and the inner wall of the tubular member and to adhesively bond the electronic tag to the slot.

In another aspect, the invention comprises an electronic tag apparatus, comprising a circumferential slot formed in an inner wall of a tubular member and an electronic tag coupled to a circumferential ring. The circumferential ring is disposed in the slot and is adapted to secure the electronic tag in place.

In another aspect, the invention comprises an electronic tag apparatus, comprising a first casing joint comprising threads formed on an outer surface thereof, a second casing joint comprising threads formed on an outer surface thereof, and a casing collar comprising threads formed on an inner surface thereof. The casing collar is threadedly connected to the first casing joint and the second casing joint. A threaded ring comprising an electronic tag and threads formed on an outer surface thereof is threadedly connected to the casing collar and is positioned between the first and second casing joints.

In another aspect, the invention comprises an electronic tag apparatus, comprising a first tubular member comprising a circumferential slot formed proximate an end thereof and an electronic tag coupled to a circumferential ring. The circumferential ring is disposed in the circumferential slot, and a second tubular member is positioned adjacent to the first tubular member proximate the slotted end so as to axially restrain the circumferential ring in the circumferential slot.

In another aspect, the invention comprises an electronic tag apparatus, comprising a first tubular member comprising a slot formed proximate an end thereof, the slot forming an opening in an inner surface of the tubular member. An electronic tag is disposed in the slot, and a second tubular member is positioned adjacent to the first tubular member proximate the slotted end so as to axially restrain the electronic tag in the slot.

In another aspect, the invention comprises an electronic tag apparatus, comprising first and second tubular members disposed in a wellbore, a collar disposed between the first and second tubular members, and a circumferential ring comprising an electronic tag coupled thereto. The circumferential ring is disposed proximate an inner surface of the collar.

In another aspect, the invention comprises an electronic tag apparatus comprising a tubular member and an electronic tag disposed in the tubular member. A signal boosting apparatus is disposed in the tubular member proximate the electronic tag.

Other aspects and advantages of the invention will be apparent from the following description and the appended claims.

### Brief Description of the Drawings

Figure 1 shows a schematic view of a typical prior art electronic tag.

Figure 2A shows an embodiment of the invention.

Figure 2B shows a cross-sectional view of the embodiment shown in Figure 2A.

Figure 2C shows a cross-sectional view of an embodiment of the invention.

Figure 2D shows a cross-sectional view of an embodiment of the invention.

Figure 2E shows a cross-sectional view of an embodiment of the invention.

Figure 2F shows a cross-sectional view of an embodiment of the invention.

Figure 2G shows a view of an embodiment of the invention.

Figure 2H shows a view of an embodiment of the invention.

Figure 2J shows a view of an embodiment of the invention.

Figure 2K shows a cross-sectional view of an embodiment of the invention.

Figure 2L shows a perspective view of an embodiment of the invention.

Figure 2M shows a cross-sectional view of an embodiment of the invention.

Figure 2N shows a cross-sectional view of an embodiment of the invention.

Figure 2P shows a cross-sectional view of an embodiment of the invention.

Figure 2Q shows a cross-sectional view of an embodiment of the invention.

Figure 2R shows a cross-sectional view of an embodiment of the invention.

Figure 2S shows a cross-sectional view of an embodiment of the invention.

Figure 2T shows a cross-sectional view of an embodiment of the invention.

Figure 2V shows a cross-sectional view of an embodiment of the invention.

Figure 2W shows a cross-sectional view of an embodiment of the invention.

Figure 2X shows a cross-sectional view of an embodiment of the invention.

Figure 2Y shows a cross-sectional view of an embodiment of the invention.

Figures 3A and 3B show cross-sectional views of an application of an embodiment of the invention.

Figure 4 shows a cross-sectional view of an application of an embodiment of the invention.

Figures 5A and 5B show a cross-sectional view of an application of an embodiment of the invention.

Figures 6A and 6B show cross-sectional views of an application of an embodiment of the invention.

Figure 7 shows a cross-sectional view of an application of an embodiment of the invention.

Figures 8A and 8B show a cross-sectional views of an application of an embodiment of the invention.

Figure 9 shows a top cross-sectional view of an application of an embodiment of the invention.

Figures 10A and 10B show cross-sectional views of an application of an embodiment of the invention.

Figure 11 shows a cross-sectional view of an application of an embodiment of the invention.

Figures 12A and 12B show cross-sectional views of an embodiment of the invention.

Figures 13A and 13B show an embodiment of the invention.

Figures 14A and 14B show an embodiment of the invention.

Figures 15A and 15B show an embodiment of the invention.

### Detailed Description of the Invention

The following description includes details related to electronic tag packaging and to the use of packaged electronic tags in, for example, downhole environments. The electronic tags described below may comprise radio-frequency transponders, optical transmission tags, microwave transmission tags, acoustic or ultrasonic transmission tags, tactile transmission tags, magnetic transmission tags, and the like. All of these and other similar types of electronic tags are intended to fall within the scope of the present invention. Accordingly, a reference to a specific type of electronic tag is not intended to be limiting.

Moreover, note that the electronic tags described below may comprise transmitters, receivers or a combination thereof. For example, in some embodiments a substantially passive electronic tag may be used in combination with an electronic tag reader adapted to detect an identification code and/or other data associated with the passive electronic tag. However, it is contemplated that the electronic tags may comprise transponders that include both transmitters and receivers. Accordingly, the electronic tags described below should be understood to include any of the combinations described herein or otherwise known in the art so that the invention is not limited to a specific arrangement of transmitters and/or receivers.

### Packaging Electronic Tags

Several types of electronic tags, including, for example, non-acoustic frequency identification transmitter units, are commercially available. Suitable examples of these electronic tags include transponders sold under the mark "Tiris," a mark of Texas Instruments, Inc. of Dallas, Texas. These radio frequency identification transmitter units are available in hermetically sealed glass capsules having dimensions of approximately 31 mm x 4 mm. The units emit a radio frequency signal at about 134.2 kHz that can be read up to about 100 cm away and comprise, for example, a 64 bit memory. However, larger or smaller transmitter memories, different frequency settings, different transmitter sizes, different transmitter packaging configurations, and the like may be used in other embodiments of the invention. Moreover, the following descriptions include a presumption that the electronic tags comprise, for example, a suitable power source (if required), suitable input/output circuitry, suitable processors, and the like. Accordingly, while the description focuses on packaging the electronic tags, necessary components required for operation of the tags are assumed to be present in each embodiment.

The electronic tags are substantially unitary in that they are self-contained and may be positioned at any selected location (*e.g*., at any selected azimuthal location and/or axial location) within, for example, tubular members such as coiled tubing, drill pipe, a casing string, and the like. Moreover, the electronic tags are also suitable for use outside of downhole environments and may be positioned proximate, for example, hydrocarbon distribution tubulars, water lines, gas lines, and the like. Electronic tags in accordance with different embodiments of the present invention are described in detail below.

In order for the electronic tag to remain operational after long-term high-temperature exposure, it is important to protect the antenna and the integrated circuit from the adverse environmental conditions such as those that may be present in downhole drilling and production environments. Adverse conditions can quickly corrode or degrade electronic wiring and component parts, especially at elevated temperatures. The present invention comprises a method and apparatus adapted to ensure that the environment within an outer shell is free from moisture and other contaminants prior to hermetically sealing the antenna and integrated circuit in the outer shell.

The electronic tag generally comprises a ferrite core coated with substantially non-outgassing materials. The ferrite core helps boost communicated signals and therefore improves both transmission and reception of signals. In some preferred embodiments, the coating process is performed in a substantially zero-humidity environment. For example, in some embodiments the electronic tag is first heated to "bake out" (*e.g.*, vaporize) any contaminants and/or moisture. Subsequently, potting material is applied and the outer shell is sealed shut. The potting material is preferably dielectric, chemically inert, and substantially non-outgassing so as to prevent formation of contaminants or corrosive materials within the shell. Note that in some preferred embodiments materials that are relatively completely non-outgassing are desirable. To the extent that completely non-outgassing materials are available, they are expressly included within the scope of the invention. Examples of suitable potting materials include, for example, various polymers, epoxies, gels, and viscous oils. The outer shell may be formed from, for example, glass, ceramics, polymers, epoxies, and other suitable materials known in the art.

After the outer shell is sealed, a substantially unfilled volume may be formed within the outer shell. The volume must also be free from moisture and contaminants, and in some embodiments of the invention, the antenna, the integrated circuit, and the potting material are sealed while the electronic tag is in a substantially zero-humidity environment. Additionally, in some embodiments, the sealing is performed in a vacuum. Alternatively, the volume may be filled with, for example, an inert gas such as nitrogen or argon. In other embodiments, a desiccant may be used to absorb any remaining moisture and contaminants within the outer shell, proximate the antenna and integrated circuit, and within the potting material.

Desiccants used with various embodiments of the invention generally work via adsorption. Adsorption refers to, for example, the ability of a desiccant to trap gases, solutes, and/or volatile liquids in solid bodies or liquids. By adsorbing corrosive gases or liquids, the desiccant generally reduces the amount of such gases and, correspondingly, reduces the likelihood of corrosive failure of electronic components. Examples of adsorptive agents include, but are not limited to: alumina, activated charcoal, calcium-aluminosilicate, montmorillonite clay porcelain, silica gel, zeolites, the family of molecular sieves based on organosilicates or organoaluminosilicates, or metalsilicate molecular sieves such as aluminophosphates. Molecular sieves are described in further detail in *Hawley's Condensed Chemical Dictionary,* Twelfth Edition, 1993, at page 791.

The adsorptive material may be selected so as to target specific gases or liquids that are to be adsorbed. In addition, the adsorptive material selected typically must be effective at elevated temperatures typical in downhole environments (*e.g.*, temperatures greater than about 140°F). Some adsorptive materials are capable of effective performance at even higher temperatures, such as greater than about 200°F and up to at least 600°F. In contrast, typical electronics packaging desiccant packets containing silica gel, are usually effective only at or near room temperature and become ineffective at elevated temperatures (such as those encountered in downhole environments).

In one embodiment, the adsorptive material includes a molecular sieve including a high-temperature desiccant such as sodium aluminosilicate. Sodium aluminosilicate adsorbs water molecules, as well as other types of molecules with larger diameters, such as aromatic branched-chain hydrocarbons. In one embodiment, sodium aluminosilicate comprises a molecular formula of Na₈₆ [(AlO₂)₈₆ (SiO₂)₁₀₆]x H₂O. This material is commonly used in oil refineries as a basis for catalysts in refining crude oil into petroleum products such as gasoline. The material is generally available from commercial chemical suppliers in, for example, powder, pellet, or bead form.

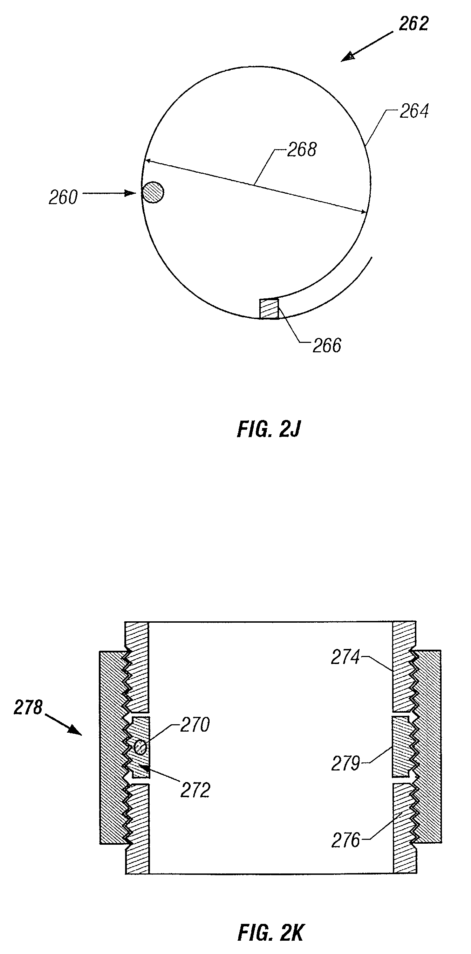

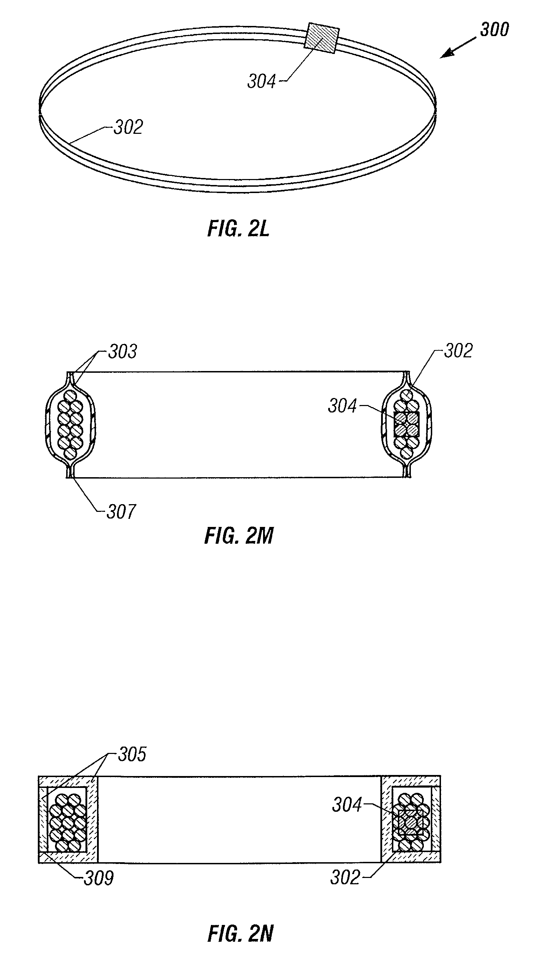

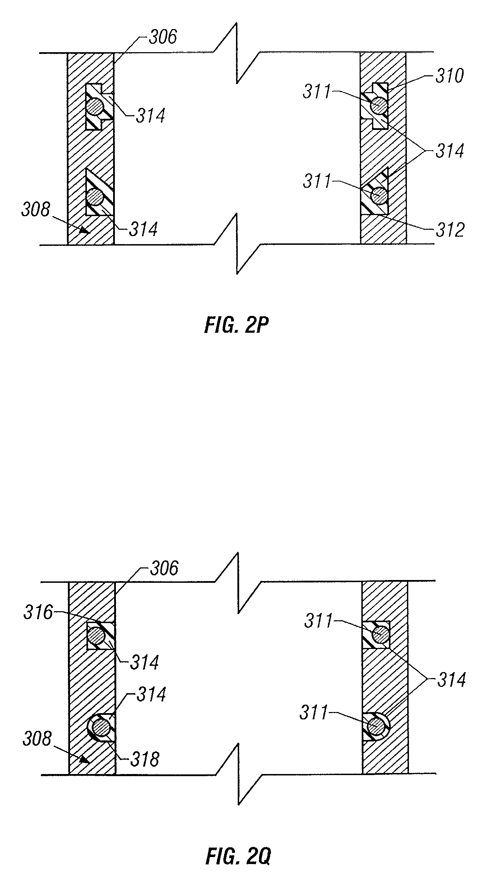

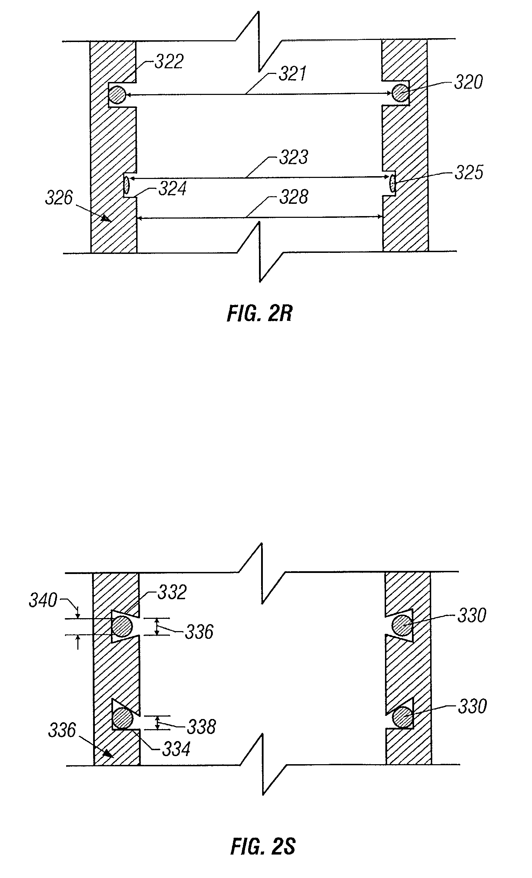

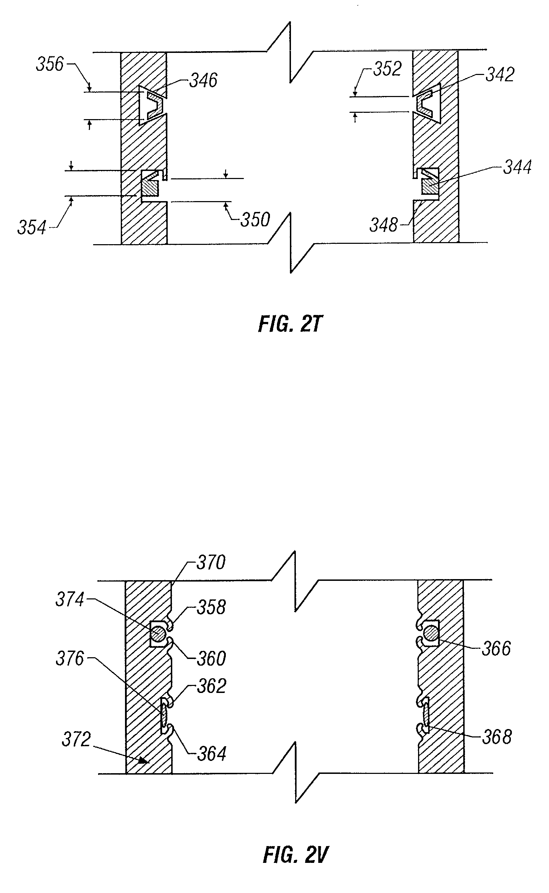

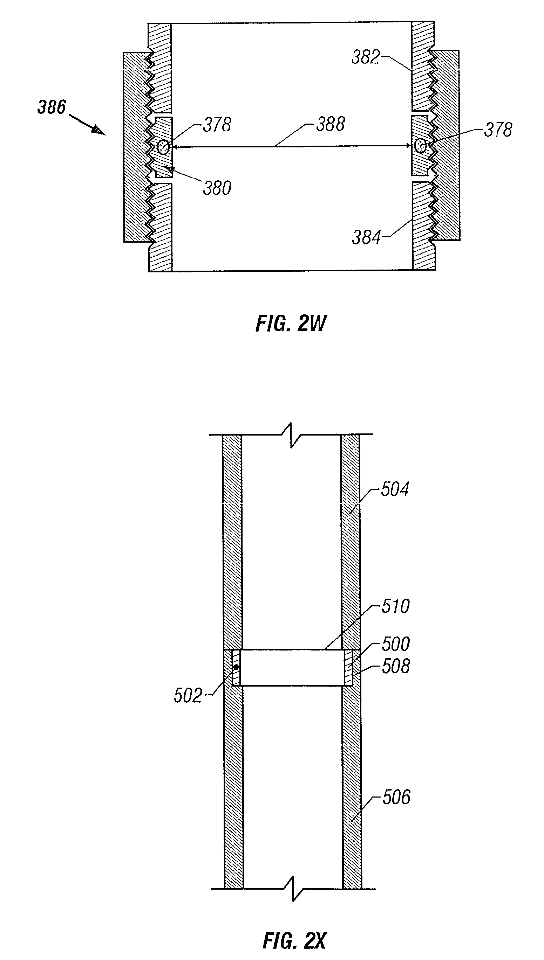

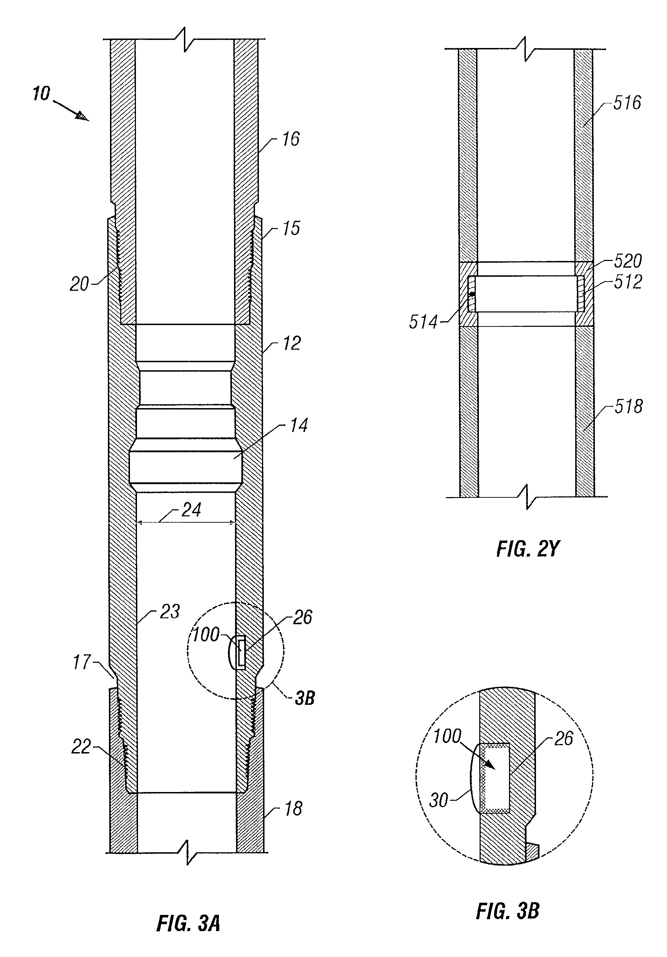

Other embodiments of the invention, described in detail below, comprise circumferential electronic tags that are adapted to be disposed proximate, for example, inner surfaces of tubulars. For example, circumferential electronic tags generally comprise a circumferential structure that allows for the passage of downhole tools, drilling fluid, and the like through an inner diameter of the electronic tags. Circumferential electronic tags **300,** such as the embodiment shown in Figure 2L, generally comprise a circumferential antenna **302** (that generally comprises loops of wire that may be coated with, for example, insulation) and at least one chip **304** operatively coupled thereto. However, in order to withstand, for example, downhole operating conditions, circumferential electronic tag **300** (including both the antenna **302** and the chip **304)** must generally be "packaged" in a protective enclosure in a manner similar to the azimuthal electronic tags described in the previous embodiments. Moreover, the circumferential antenna **302** and the chip **304** are generally formed from materials that are substantially non-outgassing as described above.

Moisture and other contaminants from the materials are, for example, "baked" out of the materials (*e.g.,* by a heating process) before packaging (*e.g.,* as stated above, packaging is desirably performed in a substantially zero-humidity environment). Exemplary embodiments of circumferential antenna packaging will be described in detail below. It should be understood, however, that one skilled in the art may substitute different suitable coatings and/or coating processes for those described below.

Loops of wire that typically form the circumferential antenna **302,** along with the rest of the electronic tag **300** (including, for example, the chip **304** and other components) are generally coated with a layer of electrically insulating and chemically resistant material, including polymers such as polytetrafluoroethylene (PTFE) (sold under the mark "Teflon," a mark of E.I. DuPont de Nemours, Inc. of Wilmington, Delaware) or polyparaxylene (sold under the mark "Parylene," a mark of Parylene Coating Systems, Inc. of Katy, Texas), or other suitable materials. Next, a heavier coating is applied so as to provide structural support for the circumferential electronic tag **300.** The type of the heavy coating may be varied with, for example, expected operating conditions. Exemplary embodiments are described in detail below. However, because other coatings are contemplated for use with the invention, the following examples are not intended to be limiting. Note that, as described above, all coatings described herein are generally applied to an assembled electronic tag.

In one embodiment, the circumferential electronic tag **300** may be inserted in a polymer molding press. A polymer may be injected into a mold so as to form a protective layer over the chemical resistant material. The protective layer may generally conform to a desired shape of the circumferential electronic tag **300,** and the final geometry of the tag **300** may be closely controlled by selecting an appropriate mold. Note that a similar molding process may be performed using compression molding techniques.

In other embodiments, the protective layer may be formed by submerging the circumferential electronic tag **300** in a liquid polymer bath. A number of "dips" (*e.g.*, submergences) in the polymer bath and/or the viscosity of the polymer may be varied to control a thickness of the polymer coating. Generally, the polymer used in either of the polymer coating processes should be substantially non-outgassing and the process should also be performed in a substantially zero-humidity environment. Accordingly, in various embodiments of the invention, the electronic tag **300** may be coated via injection molding, compression molding, submergence in a polymer bath, and other types of coating processes described herein and otherwise known in the art.

After the circumferential electronic tag **300** has been coated with a suitable polymer, the "bare" tag **300** may be either assembled into a tubular (as described in detail below) or encased between layers of materials that include, for example, polymers or ceramics. For example, a circumferential electronic tag **300** may be placed between two opposing sheets **303** of PTFE that are hermetically sealed **307** to each other as shown in Figure 2M. Alternatively, circumferential electronic tag **300** may be placed in a hermetically sealed **309** ceramic covering **305** as shown in Figure 2N. Note that a single piece or a plurality of pieces of Teflon, ceramic, and/or other suitable materials (such as epoxies, including ceramic epoxies and glass-filled epoxies) may be used to encase the circumferential electronic tag **300,** and the embodiments shown in Figures 2M and 2N are not intended to be limiting. Note that as referred to herein, "hermetically sealing" should be interpreted to include establishing as close to a complete hermetic seal as possible. Whereas producing a perfect hermetic seal, in some instances, is difficult, hermetically sealing also includes substantially forming a hermetic seal as will be understood by those with ordinary skill in the art.

Further, note that azimuthal electronic tags may be installed in similar circumferential packaging arrangements as well where, for example, the azimuthal tag is encased proximate an inner surface or an outer surface of a ceramic or polymer ring. Alternatively, a sealed azimuthal tag may be disposed in a slot formed on an internal or external surface of a circumferential ceramic or polymer ring. Accordingly, while the discussion of "encasing" is introduced with respect to circumferential electronic tags, it is not limited to those specific embodiments because azimuthal tags may be encased in circumferential packaging as well.

As described above, the process of encasing the circumferential electronic tag **300** (including both the antenna **302** and the chip **304)** is typically performed in a controlled environment. For example, embodiments may be assembled in a substantially zero-humidity environment comprising a vacuum, a chamber filled with an inert gas such as nitrogen or argon, and the like. These assembly processes ensure that impurities are not incorporated into the circumferential electronic tags **300** such that the longevity of the tags in harsh operating conditions may be extended.

Once the circumferential electronic tag **300** has been assembled, it must be installed in, for example, a tubular. Circumferential electronic tag installations are typically referred to as either potted or unpotted installations and are described in detail below. Note that potting materials suitable for use with azimuthal tags are likewise suitable for use with circumferential tags and vice versa.

### Azimuthal Installations

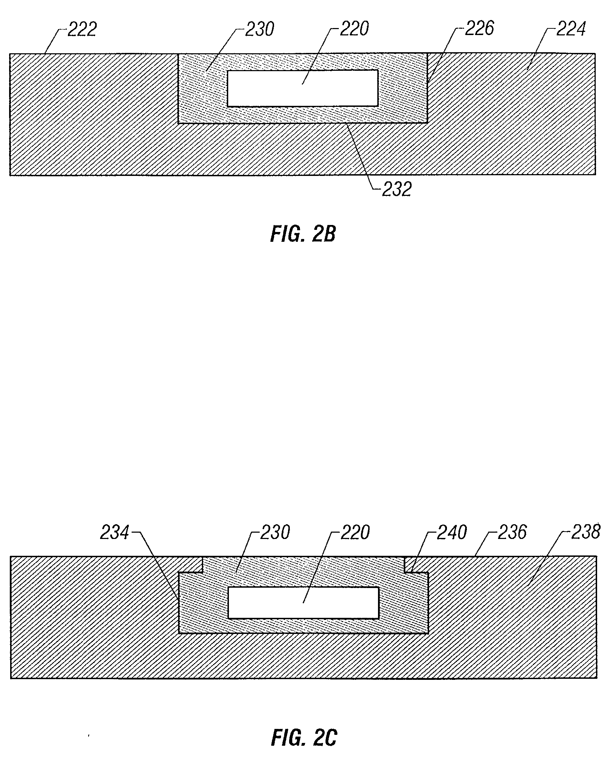

One embodiment of the invention is shown in Figure 2A. An electronic tag **220** is attached to a tubular member **224.** A cross-sectional view of the embodiment of Figure 2A is shown in Figure 2B. The electronic tag **220** is positioned proximate an inner surface **222** of the tubular member **224.** The tubular member **224** may be, for example, a tubular used in downhole applications such as drilling, production, perforation, and the like (*e.g.*, drill pipe, coiled tubing, casing, production liners *etc.*). The electronic tag **220** is disposed within a slot **226** formed on the inner surface **222** so that the electronic tag **220** will not come in contact with, for example, drilling tools or other devices that are subsequently passed along the inner surface **222** of the tubular member **224.**

The slot **226** may be formed by, for example, machining processes that cut the slot **226** at a selected azimuthal position on the inner surface **222** of the tubular member **224.** However, the slot **226** may be formed by any means known in the art. Moreover, the slot **226** shown in Figure 2A has a generally rectangular cross-section. Other cross-sectional shapes may be used within the scope of the invention, and the rectangular slot shown in Figure 2A is not intended to be limiting.

After the electronic tag **220** has been positioned in the slot **226,** the slot **226** may be filled with, for example, a potting material **230** similar to that described above. The potting material **230** serves to maintain the electronic tag **220** in position within the slot **226** and to bond the electronic tag **220** to an inner surface **232** of the slot **226.**

Another embodiment is shown in Figure 2C. In this embodiment, the electronic tag **220** is disposed in a slot **234** formed on an inner surface **236** of a tubular member **238** in a manner similar to that described above. The slot **234,** however, comprises an undercut **240** that is adapted to provide a mechanical restraint for the electronic tag **220** when the electronic tag **220** is adhesively secured with the potting material **230.** For example, in some downhole environments, the adhesive bond of the potting material **230** to the slot **234** in the tubular member **238** may be insufficient to substantially fix the electronic tag **220** in place with respect to the tubular member **238.** Accordingly, the adhesive bond of the potting material **230** is supplemented by the mechanical support of the undercut **240** so that, after the potting material hardens in the slot **234,** the undercut **240** holds the electronic tag **220** in place even if the adhesive bond between the potting material **230** and the slot 234 fails or is incomplete.

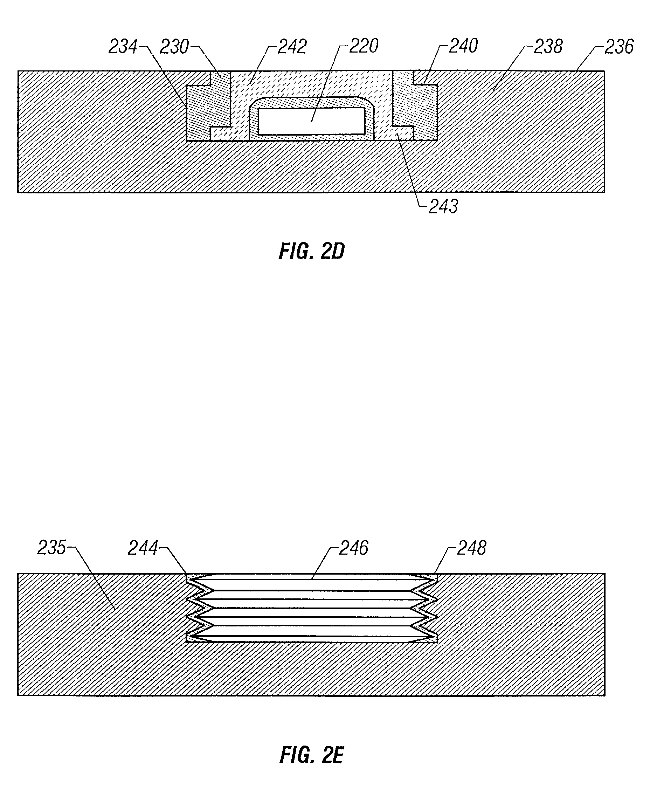

In another embodiment of the invention shown in Figure 2D, the electronic tag **220** is installed in the slot **234** with the undercut **240** in a manner similar to the embodiment of Figure 2C. However, a shield **242** is disposed over the electronic tag **220** so as to provide additional protection from flow erosion through the tubular member **238** and from contact with tools, etc., that are passed through the tubular member **238.** The shield **242** may comprise, for example, a non-metallic material such as a ceramic or any other suitable non-metallic material known in the art. The shield **242** is typically installed so that the potting material **230** fills both under and around the shield **242** so that both the shield **242** and the electronic tag **220** are retained in both an adhesive and mechanical fashion with the potting material **230** and the undercut **240** in the tubular member **238,** respectively. Note that a flange **243** formed on the shield **242** also helps form a mechanical restraint in the undercut **240.** In other embodiments that do not include an undercut, the flange still helps form a mechanical restraint after the potting material hardens.

Alternatively, a shield could be used in combination with the embodiment of Figure 2B such that the shield is bonded in place with the potting material **230** in the absence of the further mechanical restraint provided by an undercut. Moreover, in other embodiments, shields without flanges may be used in similar arrangements as those shown in Figures 2D and 2B above.

The rectangular undercut **240** shown in Figures 2C and 2D is not intended to be limiting. For example, other undercut geometries are acceptable. For example, as will be described in detail below, slots may comprise triangular, conical, and asymmetrical undercuts, among other shapes. Moreover, undercuts may be used so that potting material is not required to adhesively bond the electronic tag in place. These configurations are contemplated within the scope of the invention, and exemplary embodiments will be described in detail below.

Another embodiment of the invention, as shown in Figure 2E, comprises a threaded slot **244** machined into a tubular member **235** so that a similarly threaded electronic tag **246** may be threadedly engaged with the threaded slot **244.** In some embodiments, a thread locking compound **248** may be used to secure the electronic tag **246** in position and to keep the tag **246** from rotating once installation is complete. The thread locking compound **248** may be, for example, potting material similar to that used in previous embodiments or any other suitable thread locking compound known in the art. In some embodiments of the invention, the threaded slot **244** may penetrate an entire thickness of the tubular member **235,** and the threaded electronic tag **246** and/or the thread locking compound **248** may serve as a plug that prevents fluid communication between an interior and an exterior of the tubular member **235.**

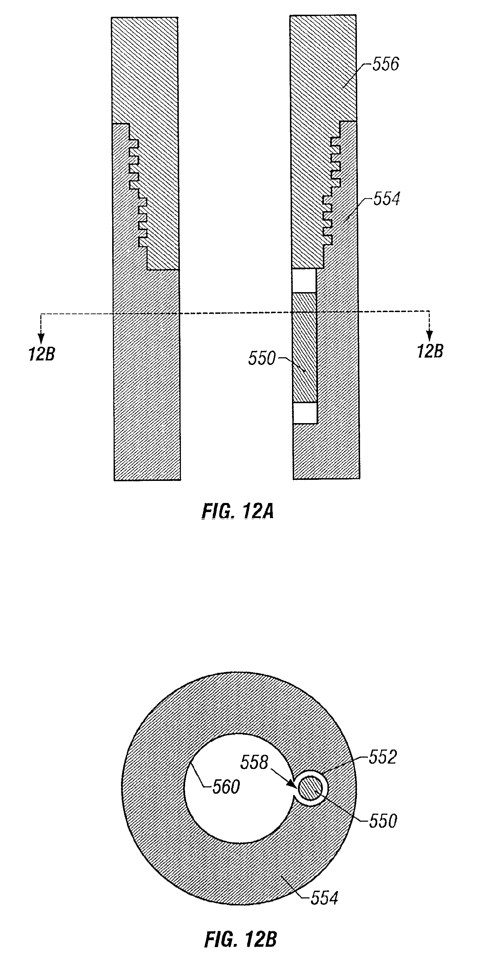

In another embodiment of the invention shown in Figures 12A and 12B, an electronic tag **550** may be disposed in slot **552** formed proximate an end of a first tubular member **554.** The electronic tag **550** may be secured when a second tubular member **556** (*e.g*., a landing nipple) is coupled to the first tubular member **554** (*e.g*., through a threaded engagement). The slot **552** may be, for example, drilled in the first tubular member **554,** and a diameter of the slot **552** may be selected to be approximately the same diameter or a little larger than a diameter of the electronic tag **550.** Note that the slot **552** is generally sized to be sufficiently large to provide an opening **558** proximate an inner surface **560** of the first tubular member **554** so as to form a "window" through which the electronic tag **550** can communicate with other electronic tags, downhole tools, and the like that are passed through the first and second tubular members **554, 556.** Moreover, the slot **552** may be filled with a potting material as described in the previous embodiments.

While the previous embodiments show the installation of a single electronic tag at selected azimuthal position within a tubular member, it is within the scope of the invention to position a plurality of electronic tags at similar or different azimuthal and/or axial locations within the tubular member. These embodiments will be described in detail below, and the examples shown above are not intended to be limiting.

### Circumferential Installations of Azimuthal Tags

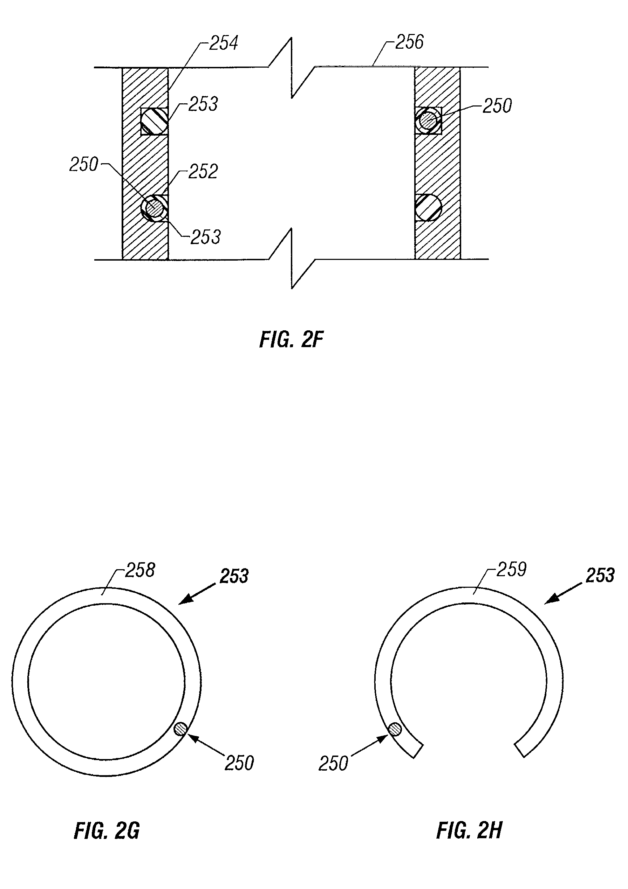

Another embodiment of the invention is shown in Figure 2F. In this embodiment of the invention, an electronic tag **250** is disposed in a mounting ring **253** (*e.g.*, a circumferential installation ring) prior to installation in a circumferential groove **252** machined in an inner surface **254** of a tubular member **256.** Advantageously, it is often less difficult to machine a circumferential groove in a tubular member than to, for example, machine undercut slots such as those described in the embodiments listed above. The circumferential groove **252** may be machined to closely match the geometry of the mounting ring **253,** or, alternatively, the circumferential groove **252** may be oversized to permit the addition of, for example, potting material to adhesively bond the mounting ring **253** in place with respect to the tubular member **256.**

In this embodiment, the electronic tag **250** may be coupled to a full ring **258** or a split circumferential installation ring **259** as shown in Figures 2G and 2H, respectively. The ring **258, 259** material may be selected depending upon, for example, the downhole conditions expected during operations. For example, polymers including polytetrafluoroethylene (such as that sold under the mark "Teflon," a mark of E.I. DuPont de Nemours, Inc. of Wilmington, Delaware) exhibit good chemical resistance while metal rings **258, 259** that exhibit good wear and corrosion resistance may be used if, for example, the electronic tags **250** are positioned in ceramic inserts (not shown) formed in the rings **258, 259** so that the electronic tags **250** have a non-metallic "window" proximate the inner surface (**254** in Figure 2F) of the tubular member (**256** in Figure 2F). Note that the full ring **258** is typically made of a pliable material so that it may be inserted into the circumferential groove (**252** in Figure 2F) while the split ring **259** may be made of a stiffer material since it may be more readily deformed. Regardless of the type of ring or the material from which it is formed, the ring must generally have an inner diameter that is substantially the same as or greater than an inner diameter of the tubular member (**256** in Figure 2F) so as to prevent contact between the ring and any tools, *etc.* passing through the tubular member (**256** in Figure 2F) during, for example, drilling operations.

Other embodiments of the invention may include a "drop-in" installation of both full and split ring installations. For example, in the embodiment shown in Figure 2X, a circumferential ring **500** (which may comprise a full ring or a split ring) that is coupled to an electronic tag **502** may be "dropped" into position between casing joints **504, 506** or other lengths of oilfield tubulars. In this embodiment, the circumferential ring **500** is positioned in a circumferential slot **508** machined into an end **510** of a first casing joint **506** (note that wall thicknesses of the casing joints **504, 506** are exaggerated for clarity in the Figure). A second casing joint **504** is positioned adjacent the first casing joint **506** and both protects and provides an axial restraint for the circumferential ring **500.** In these embodiments, circumferential rings that form both full rings and split rings may be formed from relatively stiff materials because little or no deformation is required for installation.

Other embodiments, such as the embodiment shown in Figure 2Y, may comprise an electronic tag **514** coupled to a circumferential ring **512** that is positioned proximate an inner surface of a collar **520.** The collar may then be positioned between adjacent casing joints **516, 518.** Note that in both of the previous embodiments, the adjacent casing joints may also be connected by any means know in the art (*e.g*., the casing joints may be threadedly coupled, joined by welds, and the like). Moreover, the collar **520** may be coupled to the casing joints **516, 518** as well. Accordingly, the simplified views shown in Figures 2X and 2Y are not intended to be limiting.

Another embodiment of the invention is shown in Figure 2J. In this embodiment, an electronic tag **260** is attached to a ratchet ring **262.** The ratchet ring **262** comprises a ring **264** of material (typically a relatively thin ring) that may be, for example, spring steel or a similar material, and a ratcheting mechanism **266** that typically comprises a one-way ratchet. The ratchet ring **262** is installed by radially expanding the diameter **268** of the ring **264** by activating the ratcheting mechanism **266** so that the diameter **268** of the ring expands to substantially the same diameter as an inner diameter of a circumferential groove (not shown) machined in a tubular member (not shown). The ratcheting mechanism **266** prevents the ring **264** from decreasing in diameter and, therefore, helps hold the ring **264** in place in the tubular member (not shown).

Advantageously, the ratcheting mechanism **266** may be adapted so as to allow installation of the ratchet ring **262** in a variety of tubing diameters. For example, one size of ratchet ring **262** could be used in a variety of tubulars so as to facilitate interchangeability and uniformity. Moreover, the ratchet may also be a releasable ratchet, the embodiments comprising one-way ratchets are not intended to be limiting.

Note that ridges or barbs may be formed on an outer surface of some of the circumferential full ring and split ring embodiments. The ridges or barbs may help axially secure the circumferential electronic tag in position with respect to a tubular member in which the circumferential electronic tag is installed. The barbs help prevent axial motion of the electronic tags during installation, drilling operations, and the like.

In another embodiment of the invention shown in Figure 2K, an electronic tag **270** is disposed in a threaded casing ring **272** adapted to be disposed between casing joints **274, 276** and proximate a casing collar **278.** In this embodiment, the casing ring **272** may be used with substantially unmodified casing hardware so that additional machining of parts is minimized. Moreover, the casing ring **272** may be, for example, a full ring or a split ring as described in the embodiments listed above. The casing ring **272** may be formed from any suitable material known in the art and subject to the requirements set forth above (*e.g.*, there must be a non-metallic "window" between the electronic tag **270** and an inner surface **279** of the casing ring **272).**

### Circumferential Electronic Tag Installations

Examples of embodiments comprising potted installations are shown in detail in Figures 2P and 2Q. In the embodiments shown in Figure 2P, circumferential electronic tags **311** are installed in undercut slots **310, 312** formed on an inner surface **306** of a tubular member **308.** The first undercut slot **310** is similar to those described with respect to previous embodiments. Both undercuts are generally filled with a potting material **314** after the installation of the circumferential electronic tags **311.** As described above, the potting material **314** forms an adhesive bond with the tubular member **308** and, after solidifying, is mechanically constrained within the undercut slots **310, 312** by the geometry of the undercut slots **310, 312.** For example, in the embodiments shown, the undercut slots **310, 312** comprise tapers and/or narrowed portions proximate the inner surface **306,** the tapered portions forming a mechanical barrier between the electronic tags **311** and the inner surface **306.** The undercut slots **310, 312** shown in the embodiment of Figure 2P are only two examples of undercut geometries that may be used to install the circumferential electronic tags **311,** and the specific geometries of the undercuts **310, 312** shown in Figure 2P are not intended to be limiting.

The potting material **314,** as described above, generally fills the undercut slots **310, 312** and thereby fills any voids surrounding the circumferential electronic tags **311.** The potting material **314,** accordingly, may be a conformal liquid such as an epoxy, polyurethane, vinyl, and similar materials known in the art. The potting material **314** provides chemical protection for the circumferential electronic tags **311** and must generally be deformed or fractured in order to remove the tags **311.** Therefore, the potting material **314** also forms a barrier against unintentional tag removal.

Potted installations may also be formed in non-undercut slots **316, 318,** as shown in Figure 2Q. In these embodiments, the circumferential electronic tags **311** are held in place by the tag geometry (*e.g*., the manner in which the tags **311** are coupled to, for example, installation rings and the manner in which the installation rings conform to the slots **316, 318)** and by the adhesive properties of the potting material **314.** Again, the slots **316, 318** shown in Figure 2Q show only two examples of a plurality of possible non-undercut slot geometries and are not intended to be limiting.

Embodiments comprising unpotted installations of circumferential electronic tags are shown in Figures 2R, 2S, 2T, 2V, and 2W. In the embodiment shown in Figure 2R, circumferential electronic tags **320, 325** are installed radially into slots **322, 324** formed in a tubular member **326.** In these embodiments, a diameter **321, 323** of the circumferential electronic tags **320, 325** (*e.g.*, a diameter of the ring to which the electronic tag is coupled) is typically greater than the inner diameter **328** of the tubular member **326,** and the circumferential electronic tags **320, 325** are protected within the slots **322, 324** by the radial clearance between the respective diameters **321, 323** and **328.**

In the embodiments shown in Figure 2S, installation of circumferential electronic tags **330** in slots **332, 334** formed in a tubular member **336** requires localized deformation of the electronic tags **330.** For example, the slots **332, 334** shown in the embodiments have insertion slots **336, 338** that comprise a reduced width with respect to a width **340** of the electronic tags **330.** Accordingly, the electronic tags **330** must be "forced" or "snapped" into the slots **332, 334** during insertion therein, and this type of insertion ensures that there is a positive retaining force holding the electronic tags **330** in place relative to the tubular member **336.** In these embodiments, therefore, the packaging of the electronic tags **330** must be flexible enough to allow installation via deformation.

Similar embodiments are shown in Figure 2T. However, in contrast to the relatively simple (*e.g*., substantially round, elliptical, and/or oval) cross-sections of previous embodiments of the electronic tags, cross-sections of circumferential electronic tags **342, 344** shown in the embodiment of Figure 2T may be designed to form barbs, lips, tabs, and similar protrusions that mechanically secure the electronic tags **342, 344** in slots **346, 348** after insertion therein. In these embodiments, the electronic tags **342, 344** may be deformed during insertion in a manner similar to the embodiments shown in Figure 2S, and the tabs formed on the electronic tags **342, 344** may be compressed and/or otherwise deformed so that the electronic tags may be inserted into the slots **346, 348.** After insertion into the slots **346, 348,** the tabs generally expand to a substantially undeformed position. Moreover, insertion widths **352, 350** of the slots **346, 348** may be varied so that, for example, the insertion widths **352, 350** are smaller than expanded widths **356, 354** of the electronic tags **342, 344** such that the electronic tags are securely constrained within the slots **346, 348** after insertion. Note that potting material may be used with these embodiments as well and that the tabs or barbs may be positioned on either or both of inner and outer surfaces of the electronic tags **342, 344.**

Another embodiment of the invention is shown in Figure 2V. In this embodiment, tabs **358, 360, 362, 364** are disposed proximate slots **366, 368** formed on an inner diameter **370** of a tubular member **372.** The tabs **358, 360, 362, 364** are deformable and act to constrain circumferential electronic tags **374, 376** within the slots **366, 368.** The tabs **358, 360, 362, 364** may be deformed so that they do not interfere with, for example, the passage of drilling tools through the inner diameter **370** of the tubular member **372.** The tabs **358, 360, 362, 364** may be deformed by any means known in the art, such as by passing a mandrel (not shown) through the inner diameter **370** of the tubular member **372.** Moreover, this embodiment is advantageous because the electronic tags **374, 376** may be removed from the tubular member **372** by simply expanding the tabs **358, 360, 362, 364** to a pre-installation position. The embodiment shown in Figure 2V comprises substantially symmetrical tabs **358, 360, 362, 364.** However, other embodiments may comprise, for example, asymmetrical tabs, a single tab adapted to retain the electronic tags **374, 376** in the slots **366, 368,** and the like. Moreover, potting material may be used with this embodiment of the invention to provide additional protection for the electronic tags.

Another embodiment of the invention shown in Figure 2W is similar to the embodiment shown in Figure 2K but is applied to the installation of a circumferential electronic tag **378.** In this embodiment, the electronic tag **378** is disposed in a threaded casing ring **380** adapted to be disposed between casing joints **382, 384** and proximate a casing collar **386.** The casing ring **380** may be used with substantially unmodified casing hardware so that additional machining of parts is minimized. Moreover, the casing ring **380** may be, for example, a full ring or a split ring as described in previous embodiments. The casing ring **380** may be formed from any suitable material known in the art and subject to the requirements set forth above (*e.g.,* there must be a non-metallic "window" between the circumferential electronic tag **378** and an inner surface **388** of the casing ring **380).**

Many of the embodiments described above with respect to, for example, circumferential electronic tags may work equally well with non-circumferential electronic tags *(e.g.,* azimuthal tags coupled to circumferential rings). Accordingly, it is expressly within the scope of the invention to incorporate any of the previously described installation techniques with both circumferential and non-circumferential electronic tags.

The embodiments described above form extended life electronic tags that are useful in hostile environments such as those experienced when drilling wellbores in earth formations whereby the electronic tags must operate with prolonged exposure to high temperature conditions in a chemically corrosive environment. The packaged electronic tags are generally free from pollutants, moisture, and other contaminants that could otherwise corrode the electric wiring and chips and thereby degrade the longevity of the electronic tags. Moreover, the above described embodiments show installation techniques that securely fix the electronic tags in place so as to ensure reliable measurements.

### Signal Boosting Embodiments

Some embodiments of the invention may comprise coils of wire, metal rings, and the like that are adapted to form antenna installations and thereby increase or "boost" signals received and/or transmitted by the electronic tags. Several embodiments will be described in detail below. It should be understood that the installations shown below may be used with any of the embodiments described in the present application. Accordingly, the specific embodiments shown below are not intended to be limiting.

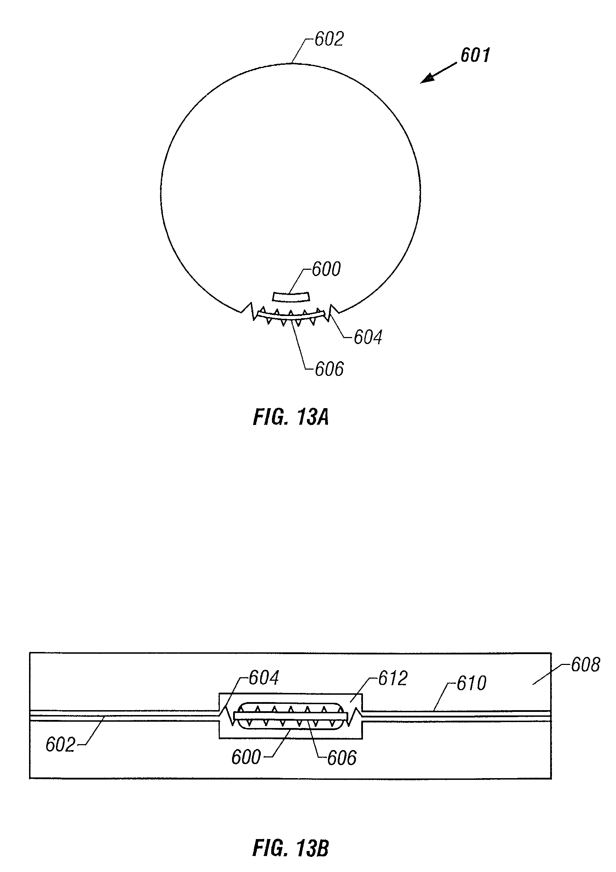

One embodiment is shown in Figures 13A and 13B. Figure 13A shows a substantially continuous wire loop **602** including a coiled spring section **604.** The spring **604** is adapted to enclose a core, such as a ferrite core **606,** so as to form a signal boosting apparatus **601.** An electronic tag **600** is disposed proximate the signal boosting apparatus **601** so that a strength of signals sent and/or received by the electronic tag **600** are increased by a selected amount.

Figure 13B shows the signal boosting apparatus **601** disposed in a circumferential ring **608.** The wire loop **602** encircles the ring **608** and is disposed in a slot **610** formed on an outer surface of the ring **608.** The electronic tag **600** and the spring **604** (including the ferrite core **606**)are disposed in another slot **612** formed in the ring **608.** The electronic tag **600** may be fixed in place using, for example, an adhesive or a potting material as described above. The signal boosting apparatus **601** may be installed, for example, by expanding the wire loop **602** by extending the spring **604** until the signal boosting apparatus **601** is disposed in the slots **610, 612.**

Note that the entire signal boosting apparatus **601** or portions thereof may be potted in place after installation according to any of the methods described herein. Further, the installation shown above is only shown to clarify the arrangement of the electronic tag and the signal boosting apparatus. Any of the installation arrangements described above may be used in combination with the signal boosting apparatus, and the installation described above is not intended to be limiting.

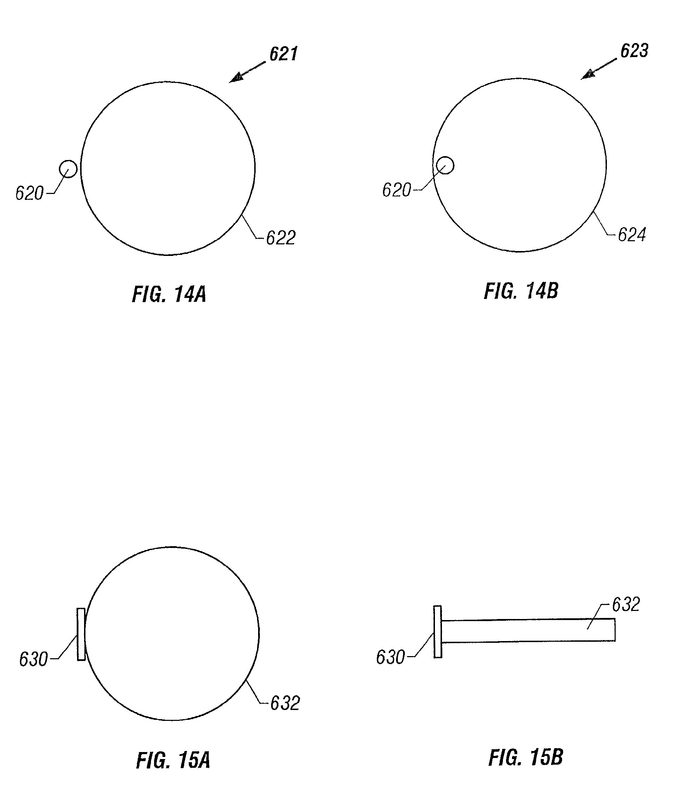

Other embodiments are shown in Figures 14A and 14B. In these embodiments, an electronic tag **620** is positioned proximate to and either within (Figure 14B) or outside of (Figure 14A) a wire loop **624, 622.** Note that the wire loops **622, 624** may, for example, be ratcheting rings or circumferential installation rings as described above. Moreover, the loop/tag assemblies **621, 623** may be disposed in a ring, molded in a polymer coating, potted in place, or otherwise installed by any of the methods described herein. Further, a cross-section of the wire loop **622, 624** may be circular, rectangular, or any other shape known in the art. Note that, generally, an axis of the electronic tag **620** is generally parallel to an axis of the wire loops **622, 624** (as shown in Figures 14A and 14B).

Another embodiment of the invention is shown in Figures 15A and 15B. An electronic tag **630** (that is generally in the form of a thin disk as shown in the Figures) is coupled to a ring **632.** The ring **632** shown in the Figures has a rectangular cross-section, but other cross-sectional shapes may be used with the embodiment. Moreover, the ring **632** may be substantially continuous, ratcheting, or may be formed according to any of the embodiments described herein. The ring **632** and tag **630** installation is advantageous because of the relatively thin cross-section shown in Figures 15A and 15B. Note that the ring/tag assembly may, for example, be coupled to a polymer ring or otherwise attached to a separate structure for installation in a tubular and the like. Accordingly, the specific arrangement shown in Figures 15A and 15B are not intended to limit the scope of the embodiment.

### Electronic Tags in Downhole Applications

Examples of applications of extended life electronic tags according to various embodiments of the present invention follow. The examples described below are not intended to limit the scope of the present invention.

Figure 3A shows extended life electronic tags, indicated generally as **100,** disposed in a downhole arrangement and adapted to, for example, locate, install, actuate, and/or manage downhole equipment in a wellbore. A segment of a tubing string **10** includes a first downhole structure, which may comprise a landing nipple **12** that has an axial bore **14** therethrough. The landing nipple **12** is attached at its upper end **15** to an upper tubular member **16** and at its lower end **17** to a lower tubular member **18** by threaded connections **20** and **22,** respectively. The landing nipple **12** has an inner diameter **24** that is defined by an inner surface of the nipple wall **23.** A recess **26** is formed in the inner surface of the nipple wall **23,** and an extended life electronic tag **100** is disposed therein. The extended life electronic tag **100,** which is shown in detail in Figure **3B,** stores an identification code and transmits a signal corresponding to the identification code. The landing nipple **12** may be formed from any material suitable for downhole use, such as steel, nickel-based alloys, and the like. A retainer cap **30,** which may comprise, for example, a ceramic or composite material (such as resin coated fibers and the like), may be positioned so as to substantially cover the extended life electronic tag **100** and, in some embodiments, physically seal the electronic tag **100** from contact with well fluids and other downhole tools (not shown) that may be passed through the inner diameter **24.** However, because the extended life electronic tag **100** is hermetically packaged using, for example, the methods described above, the cap **30** is not an essential aspect of the present invention.

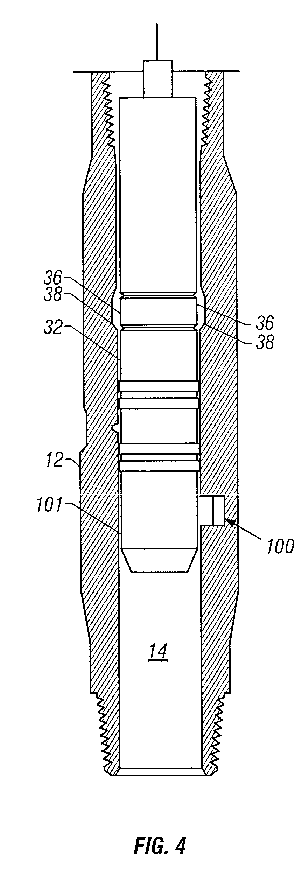

Figure 4 shows a second downhole structure, which in this embodiment comprises a wireline lock **32,** that is adapted to operate in association with the landing nipple **12.** The wireline lock **32** comprises a second electronic tag **101** that receives signals from, for example, the electronic tag **100** disposed on the landing nipple **12.** The electronic tag **101** decodes the signal to determine the identification code corresponding to the electronic tag **100** and compares the identification code to a preselected target identification code.

As shown in Figure 4, when the wireline lock **32** is disposed proximate the landing nipple 12 in the wellbore (not shown), the electronic tag **101** receives the signal transmitted by the electronic tag **100,** decodes the signal to determine the identification code, and compares the determined identification code to the preselected target identification code. If the determined identification code matches the preselected target identification code, the wireline lock **32** is actuated and/or installed proximate the landing nipple **12** (or vice versa, as applicable). In this embodiment, locking tabs **36** disposed on the wireline lock **32** are extended radially outwardly into corresponding locking recesses **38** formed in the inner diameter **24** of the landing nipple **12.**

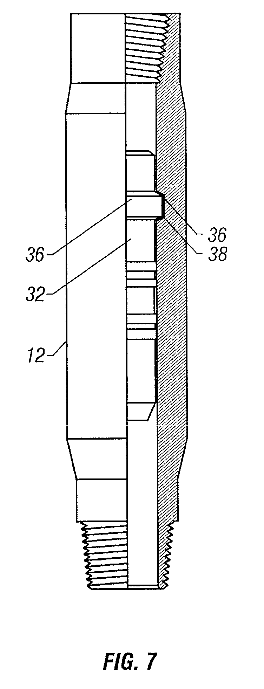

Figures 4, 6A, 6B, 7, 8A, and 8B show a second downhole structure (*e.g*., the wireline lock **32)** positioned at a selected location in a wellbore (not shown) by, for example, the locking tab **36** connection to the locking recesses **38** formed in a tubing string *(e.g.,* in the landing nipple **12).** In these embodiments, the second downhole structure *(e.g.,* a tool such as the wireline lock **32** that may comprise, for example, a flow control device and/or a depth locating device) is axially movable along a vertical axis of the wellbore (not shown). However, it is also possible to axially displace the first downhole structure relative to the second downhole structure.

Other applications of the invention comprise systems adapted to determine a depth at which a downhole tool is located. In these applications, for example, a tubing string may comprise at least one first downhole structure that is axially positioned in a wellbore. The first downhole structure may comprise landing nipples or similar downhole tools, or it may comprise tubing joints comprising electronic tags **100** attached thereto or embedded therein.

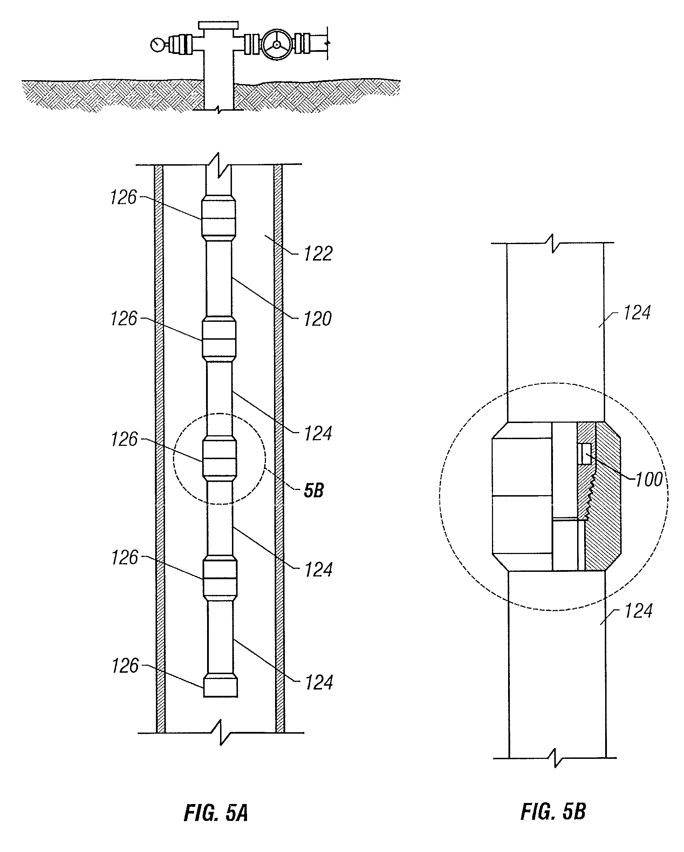

Referring to Figure 5A, a tubing string **120** disposed in a wellbore **122** comprises a plurality of joints of tubing **124,** each connected to the next in an end-to-end fashion by, for example, threaded connections (not shown). At one end **126** of each joint **124** (or, for example, proximate the ends of a plurality of joints), an extended life electronic tag **100** (not shown separately in Figure 5A) is disposed in a wall of the tubing.

Figure 5B shows an example of an extended life electronic tag **100** disposed proximate the wall of a tubing joint **124.** Because the length of each tubing joint **124** is known, and in view of the fact that the electronic tags **100** (each tag **100** having, for example, a unique identification code) are positioned at known positions proximate the ends of each tubing joint **124,** a relatively precise measurement of a depth of a secondary structure (comprising, for example, electronic tag **101** in a manner similar to the wireline lock **32** of Figure 4) proximate the tubing joints **124** *(e.g.,* internal or external to the tubing joints **124)** may be determined. In this and similar embodiments, identification codes of the electronic tags **100** disposed proximate the first downhole structure *(e.g.,* the tubing joints **124)** may be adapted to correspond to selected depths at which the first downhole structures are selected to be installed, and these identification codes may be detected by the electronic tag **101** disposed proximate the second downhole structure as it is axially displaced in the wellbore **122** so as to determine the depth of the second downhole structure in the wellbore **122.** An application of this embodiment of the invention includes determining a depth of, for example, a perforating gun (which may be the second downhole structure) disposed in the wellbore **122** so as to enable or to activate the perforating gun at a selected depth so as to perforate tubing and/or casing.

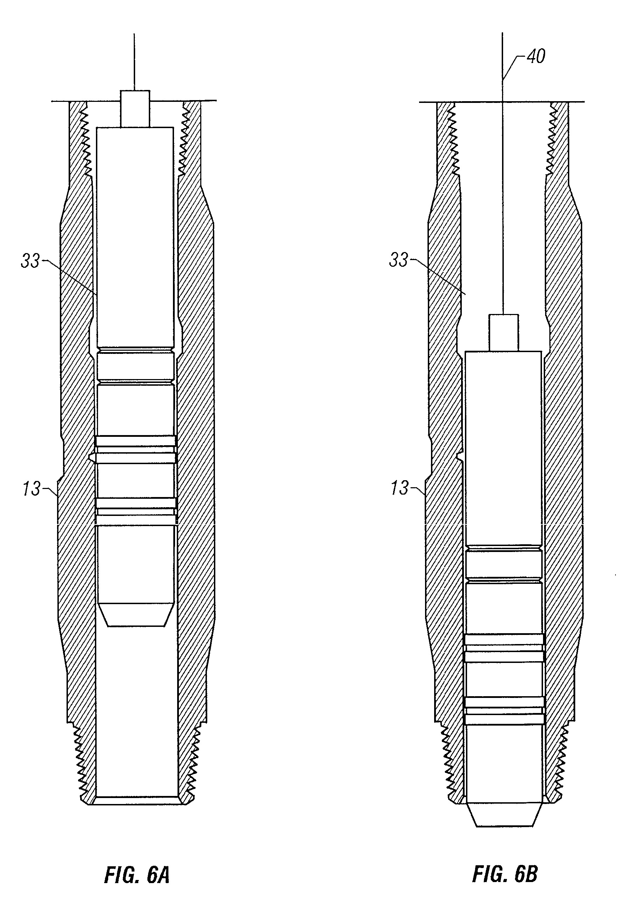

As described above, the second downhole structure may comprise a downhole tool that is adapted to be raised or lowered in a wellbore. The downhole tool may be raised or lowered by attachment to, for example, a conveyance structure **40,** such as a wireline, a slickline, coiled tubing, or drill pipe. As shown in Figures 6A and 6B, a second downhole structure **33** can be moved to different depths within the wellbore (not shown) relative to, for example, a first downhole structure **13,** by activating the conveyance structure **40.**

In other applications of the invention, the preselected target identification code may be indicative of an inner diameter of a tubular member. In this application the target identification code may be adapted to activate a downhole tool to engage a tubular member having a desired size (*e.g.*, a selected inner diameter). Accordingly, the downhole tool may be adapted to engage a plurality of different downhole structures having, for example, different diameters and/or different locking features because of preselected target identification codes transmitted and received by electronic tags disposed on the downhole tool and the downhole structures.

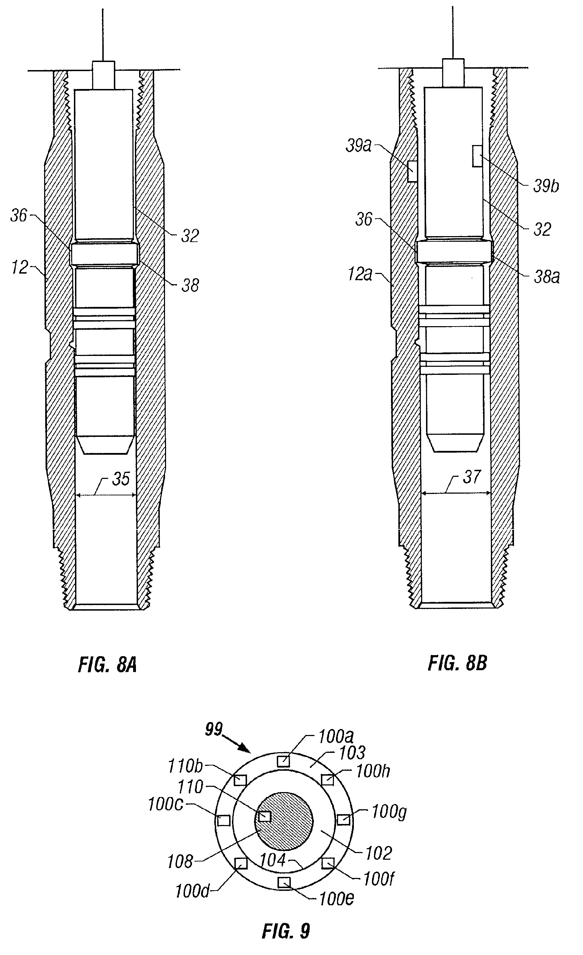

An example of this application of the invention is shown in Figures 8A and 8B. Figure 8A shows a second downhole structure, which may be a downhole tool **32,** engaged with a landing nipple **12** by locking protrusions **36** formed on the second downhole structure **32** and adapted to engage locking recesses **38** formed on an inner diameter **35** of the landing nipple **12.** When the downhole tool **32** is, for example, axially displaced within a wellbore (not shown) and is positioned proximate a second landing nipple **12a** that has a larger inner diameter **37,** the locking protrusions **36** can be extended radially outwardly to a greater extent so as to engage locking recesses **38a** on the landing nipple **12a** and thereby secure the downhole tool **32** in the wellbore (not shown). The extent to which the locking protrusions **36** should be extended may be determined by, for example, a signal (which may be, for example, a target identification code) transmitted by an electronic tag **39a** disposed on the landing nipple **12a** and received by an electronic tag **39b** disposed on the downhole tool **32.** Advantageously, a single downhole tool may be used to engage a plurality of downhole structures with, for example, different internal diameters and the like, so that it is not necessary to maintain an inventory of many different sizes and/or configurations of downhole tools adapted to, for example, engage specific diameters.

Another application of the invention is shown in Figure 9. A first downhole structure comprises a tubular member **99** having an axial bore **102** therethrough. The axial bore **102** is defined by an inner surface **103** of the tubular member **99,** which has a generally circular inner diameter **104.** The tubular member **99** comprises a plurality of extended life electronic tags **100a, 100b, 100c, 100d, 100e, 100f, 100g,** and **100h** azimuthally spaced about the inner diameter **104** and disposed proximate the inner surface **103,** and in some applications (such as that shown in Figure 9), the electronic tags **100a, 100b, 100c, 100d, 100e, 100f, 100g,** and **100h** are disposed in a single cross-sectional plane. As described above, each of the electronic tags **100a, 100b, 100c, 100d, 100e, 100f, 100g,** and **100h** transmits a signal corresponding to a different identification code (and a different azimuthal position). When a second downhole structure, such as a downhole tool **108,** is lowered into the bore **102** of the tubular member **99,** an electronic tag **110** disposed proximate the downhole tool **108** receives the identification code of the extended life electronic tag **100a, 100b, 100c, 100d, 100e, 100f, 100g,** and **100h** that is closest to it and thereby determines an azimuthal orientation of the downhole tool **108** relative to the tubular member **99.**

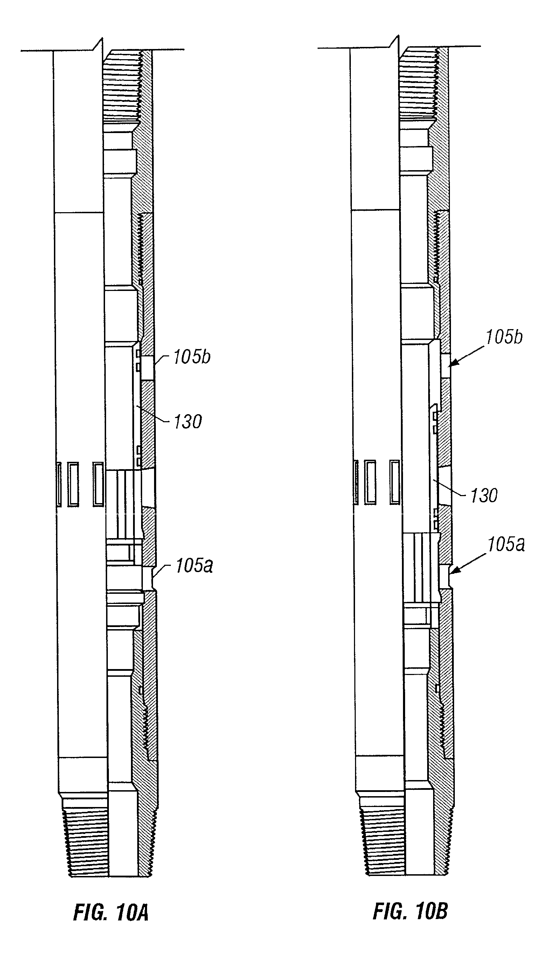

The invention may also be used with, for example, subsurface safety valves, fluid or gas production control valves, or other downhole equipment that comprises sliding sleeves, valve closure members, or other movable structures. In this application, as shown in Figures 10A and 10B, a first downhole structure comprises a movable sleeve **130** (or similar valve closure member) which has a first position and a second position (*e.g.*, an open position and a closed position as shown in Figures 10A and 10B, respectively). Note that the movable sleeve 130 may be displaced from the open position to the closed position (and, *e.g.,* back again) by any means known in the art including, but not limited to, mechanical means and hydraulic means. The movable sleeve **130** exposes a first electronic tag **105a** and occludes a second electronic tag **105b** when the movable sleeve **130** is disposed in the first position (see Figure 10A). The movable sleeve **130** occludes the first electronic tag **105a** and exposes the second electronic tag **105b** when the movable sleeve **130** is disposed in the second position (see Figure 10B). The first electronic tag **105a** transmits a signal corresponding to an identification code that is different than a signal and code for the second electronic tag **105b.** Thus, the detected identification code can be used to determine whether the movable sleeve **130** is in the open or closed position Accordingly, this application of the invention can provide a positive indication that actuation *(e.g.,* of a subsurface safety valve or production control valve) has occurred by providing a positive indication that, for example, the valve is open or closed.

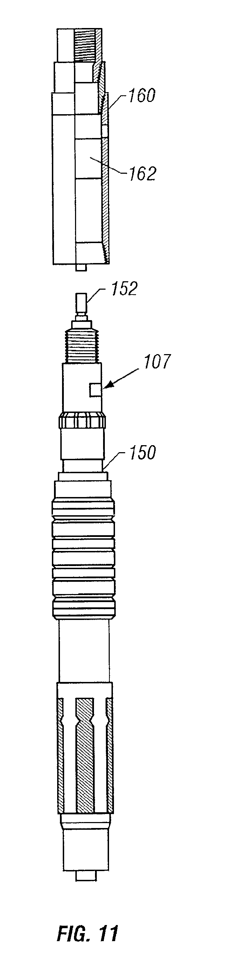

The invention may be used when "fishing" for tools or parts thereof that have become detached from supporting structure in a wellbore. In this application, as shown in Figure 11, a first downhole structure comprises a downhole tool **150** that includes a fishing neck **152,** and an extended life electronic tag **107** is disposed proximate the fishing neck **152.** A second downhole structure comprises a fishing tool **160** comprising an electronic tag **162** disposed thereon. An identification code corresponding to the electronic tag **107** disposed proximate the fishing neck **152** may be analyzed *(e.g.,* received) by the electronic tag **162** disposed on the fishing tool **160** so as to determine when the fishing tool **160** is sufficiently close to the fishing neck **152** so that the fishing tool **160** may be activated to engage the fishing neck **152** and thereby retrieve the "fish" (*e.g.*, the downhole tool **150)** from the wellbore.

Another application of the invention comprises a detachable, substantially autonomous tool that can be disengaged and released into a wellbore from the end of a supporting structure (*e.g.*, coiled tubing, a wireline, completion hardware, and the like). The detachable tool, which comprises a first electronic tag disposed thereon, may then perform a desired operation in the wellbore (*e.g.*, at some distance horizontally and/or vertically from the point at which the detachable tool disengages from the supporting structure). The detachable tool may then reengage the supporting structure after acquiring a signal from a second electronic tag disposed proximate the end of the supporting structure. Moreover, the detachable tool or a device similar thereto may be used as a repeater, an actuator, or an information relay device.

Other applications of the invention may use a plurality of location versus time measurements from a plurality of electronic tags selectively positioned in the wellbore to determine, for example, subsidence of subsurface formations. The electronic tags may be located at fixed positions within, for example, a length of casing pipe or in an open hole section of the wellbore. The electronic tags may be adapted to provide periodic measurements that enable a determination of, for example, position changes in the subsurface formation (*e.g.*, as fluids and gases are produced) that may be indicative of subsidence, fracture, and other formation phenomena.

It should be noted that the applications of extended life electronic tags described above are intended for illustrative purposes only, and are not intended as limitations to the scope of the present invention. The extended life electronic tags are advantageous in these and other applications requiring, for example, signal transmission and reception capabilities at high temperatures (for extended periods of time) and in harsh, potentially corrosive environments.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method of packaging an electronic tag, the method comprising:
heating the electronic tag so as to remove contaminants from an internal volume therein;
filling the internal volume with a potting material; and
hermetically sealing the internal volume within an outer shell.

2. The method of claim 1, wherein the outer shell comprises a polymer material.

3. The method of claim 2, wherein the polymer material comprises polytetrafluoroethylene.

4. The method of claim 1, wherein the outer shell comprises a ceramic material.

5. The method of claim 1, wherein the outer shell comprises an epoxy material.

6. The method of claim 5, wherein the epoxy material comprises at least one of a ceramic epoxy and a glass-filled epoxy.

7. The method of claim 1, wherein the potting material comprises at least one of a dielectric material, a chemically inert material, and a substantially non-outgassing material.

8. The method of claim 1, wherein the potting material comprises at least one of a polymer, an epoxy, a gel, and a viscous oil.

9. The method of claim 1, wherein the heating, filling, and sealing are performed in a substantially zero-humidity environment.

10. The method of claim 9, wherein the substantially zero-humidity environment comprises an argon atmosphere.

11. The method of claim 9, wherein the substantially zero-humidity environment comprises a nitrogen atmosphere.

12. The method of claim 1, wherein the internal volume is hermetically sealed while the electronic tag is under a vacuum.

13. The method of claim 1, further comprising positioning an adsorptive material in the internal volume.

14. The method of claim 13, wherein the adsorptive material is a material selected from the group consisting of alumina, activated charcoal, calcium aluminosilicate, montmorillonite clay porcelain, silica gel, a molecular sieve, and a metal silicate molecular sieve.

15. The method of claim 13, wherein the adsorptive material comprises a molecular sieve.

16. The method of claim 15, wherein the molecular sieve comprises an organosilicate or an organoaluminosilicate.

17. The method of claim 13, wherein the adsorptive material comprises a metal silicate molecular sieve.

18. The method of claim 17, wherein the metal silicate molecular sieve comprises aluminophosphate.

19. The method of claim 13, wherein the adsorptive material comprises a desiccant.

20. The method of claim 13, wherein the adsorptive material comprises sodium aluminosilicate.

21. The method of claim 13, wherein the adsorptive material comprises a zeolite.

22. The method of claim 13, wherein the adsorptive material may be selected so as to selectively adsorb a specific fluid.

23. The method of claim 13, wherein the adsorptive material is adapted to adsorb a corrosive gas.

24. The method of claim 13, wherein the adsorptive material is adapted to adsorb water vapor.

25. The method of claim 13, wherein the adsorptive material is effective at a temperature greater than about 200°F.

26. A method of packaging an electronic tag, the method comprising:
heating the electronic tag so as to remove contaminants from an internal volume therein;
filling the internal volume with a potting material;
filling any remaining volume within the internal volume with an inert gas; and
hermetically sealing the internal volume within an outer shell.

27. The method of claim 26, wherein the potting material comprises at least one of a dielectric material, a chemically inert material, and a substantially non-outgassing material.

28. The method of claim 26, wherein the potting material comprises at least one of a polymer, an epoxy, a gel, and a viscous oil.

29. The method of claim 26, wherein the outer shell comprises a polymer material.

30. The method of claim 26, wherein the outer shell comprises a ceramic material.

31. The method of claim 26, wherein the outer shell comprises an epoxy material.

32. The method of claim 26, wherein the heating, filling, and sealing are performed in a substantially zero-humidity environment.

33. The method of claim 26, wherein the inert gas comprises argon.

34. The method of claim 26, wherein the inert gas comprises nitrogen.

35. The method of claim 26, wherein the internal volume is hermetically sealed while the electronic tag is under a vacuum.

36. The method of claim 26, further comprising absorbing any remaining contaminants with an adsorptive material positioned in the internal volume.

37. A method of packaging an electronic tag, the method comprising:
heating the electronic tag so as to remove contaminants from an internal volume therein; and
hermetically sealing the internal volume within an outer shell.

38. The method of claim 37, wherein the outer shell comprises a polymer material.

39. The method of claim 37, wherein the outer shell comprises a ceramic material.

40. The method of claim 37, wherein the outer shell comprises an epoxy material.

41. The method of claim 37, further comprising absorbing any remaining contaminants with an adsorptive material positioned in the internal volume.

42. The method of claim 37, wherein the internal volume is hermetically sealed while the electronic tag is under a vacuum.

43. The method of claim 37, further comprising filling any remaining volume within the internal volume with an inert gas.

44. The method of claim 43, wherein the inert gas comprises argon.

45. The method of claim 43, wherein the inert gas comprises nitrogen.

46. A method of packaging an electronic tag, the method comprising:
applying a first coating to a circumferential antenna and an electronic tag, the first coating comprising at least one of polytetrafluoroethylene and polyparaxylene;
applying a second coating of a polymer adapted to provide structural support to the circumferential antenna and the electronic tag.

47. The method of claim 46, wherein the first and second coatings comprise substantially non-outgassing materials.

48. The method of claim 46, wherein the applying is performed in a substantially zero-humidity environment.

49. The method of claim 46, wherein applying the second coating comprises dipping the circumferential antenna and the electronic tag in a polymer coating.

50. The method of claim 46, wherein applying the second coating comprises:
positioning the circumferential antenna and the electronic tag in a mold; and
injecting the polymer into the mold so as to form a structurally supportive layer over the chemically resistant material.

51. The method of claim 46, wherein applying the second coating comprises:
positioning the circumferential antenna, the electronic tag, and the polymer in a mold; and
compressing the polymer into the mold so as to form a structurally supportive layer over the chemically resistant material.

52. The method of claim 46, wherein a viscosity of the polymer is selected so as to control a thickness of the second coating.

53. The method of claim 46, further comprising hermetically sealing the circumferential antenna and the electronic tag in a polymer material.

54. The method of claim 53, wherein the polymer material comprises polytetrafluoroethylene.

55. The method of claim 46, further comprising hermetically sealing the circumferential electronic tag in a ceramic material.

56. The method of claim 46, further comprising hermetically sealing the circumferential electronic tag in an epoxy material.

57. The method of claim 56, wherein the epoxy material comprises at least one of a ceramic epoxy and a glass-filled epoxy.

58. A method of positioning an electronic tag in a tubular member, the method comprising:
positioning an electronic tag in a slot formed at a selected azimuthal location in an inner wall of the tubular member;
filling the slot with a potting material so as to adhesively bond the electronic tag to the slot.

59. The method of claim 58, wherein the potting material comprises at least one of a dielectric material, a chemically inert material, and a substantially non-outgassing material.

60. The method of claim 58, wherein the potting material comprises at least one of a polymer, an epoxy, a gel, and a viscous oil.

61. The method of claim 58, wherein the slot comprises an undercut adapted to secure the electronic tag in place after the potting material hardens.

62. The method of claim 58, further comprising positioning a cover in the slot, the cover adapted to substantially cover at least a portion of the electronic tag proximate the inner wall of the tubular member.

63. The method of claim 62, wherein the cover comprises a flange adapted to mechanically secure the electronic tag in place after the potting material hardens.

64. A method of positioning an electronic tag in a tubular member, the method comprising:
radially expanding the diameter of a circumferential mounting ring coupled to the electronic tag so as to secure the electronic tag against the inner wall of the tubular.

65. A method of positioning electronic tags in a tubular member, the method comprising:
positioning an electronic tag in each of a plurality of slots formed at selected azimuthal and axial locations in an inner wall of the tubular member;
filling each of the plurality of slots with a potting material so as to adhesively bond each electronic tag to its corresponding slot.

66. A method of positioning an electronic tag in a tubular member, the method comprising:
positioning an electronic tag in an undercut slot formed at a selected azimuthal location in an inner wall of the tubular member;
filling the undercut slot with a potting material so as to adhesively bond the electronic tag to the undercut slot, the undercut slot adapted to secure the electronic tag in place after the potting material hardens.

67. A method of positioning an electronic tag in a tubular member, the method comprising:
positioning the electronic tag in a slot formed at a selected azimuthal location in an inner wall of the tubular member;
positioning a cover in the slot, the cover adapted to substantially cover at least a portion of the electronic tag proximate the inner wall of the tubular member; and
filling the slot with a potting material so as to adhesively bond the electronic tag and the cover in the slot.

68. A method of positioning an electronic tag in a tubular member, the method comprising:
positioning the electronic tag in an undercut slot formed at a selected azimuthal location in an inner wall of the tubular member;
positioning a cover in the undercut slot, the cover adapted to substantially cover at least a portion of the electronic tag proximate the inner wall of the tubular member; and
filling the slot with a potting material so as to adhesively bond the electronic tag and the cover to the undercut slot, the undercut slot adapted to secure the installed electronic tag in place after the potting material hardens.

69. A method of positioning an electronic tag in a tubular member, the method comprising:
positioning a threaded electronic tag in a threaded slot formed at a selected azimuthal location in an inner wall of the tubular member.

70. A method of positioning an electronic tag in a tubular member, the method comprising:
positioning a threaded electronic tag in a threaded slot formed at a selected azimuthal location in an inner diameter of the tubular member;
filling a space between the threaded slot and the threaded electronic tag with a potting material, the potting material adapted to adhesively bond the threaded electronic tag to the threaded slot.

71. A method of positioning an electronic tag between casing joints, the method comprising:
threadedly coupling a casing collar to a first casing joint;
threadedly coupling a threaded ring to an internal diameter of the casing collar, the threaded ring comprising an electronic tag; and
threadedly coupling the casing collar to a second casing joint.

72. The method of claim 71, wherein the threaded ring comprises a split ring.

73. A method of positioning an electronic tag in a tubular member, the method comprising:
positioning the electronic tag in a circumferential mounting ring;
positioning the circumferential mounting ring proximate an undercut slot formed in an inner wall of the tubular member; and
inserting the circumferential mounting ring into the undercut slot by deforming the circumferential mounting ring, wherein the circumferential mounting ring is adapted to return to a substantially undeformed state within the undercut slot after insertion therein.

74. The method of claim 73, wherein the circumferential mounting ring comprises a split ring.

75. The method of claim 73, wherein the circumferential mounting ring comprises ridges formed on an outer surface thereof, the ridges adapted to axially secure the circumferential mounting ring in the undercut slot.

76. A method of positioning an electronic tag between tubular members, the method comprising:
positioning the electronic tag in a circumferential mounting ring;
positioning the circumferential mounting ring proximate an inner surface of a collar;
positioning the collar between first and second tubular members in the wellbore.

77. The method of claim 76, wherein the circumferential mounting ring comprises a split ring.

78. The method of claim 76, wherein the circumferential mounting ring comprises ridges formed on an outer surface thereof, the ridges adapted to axially secure the circumferential mounting ring to the inner surface of the collar.

79. The method of claim 76, wherein the circumferential mounting ring comprises a ceramic material.

80. The method of claim 76, wherein the circumferential mounting ring comprises an epoxy material.

81. The method of claim 76, wherein the circumferential mounting ring comprises polytetrafluoroethylene.

82. A method of positioning a circumferential electronic tag in a tubular member, the method comprising:
positioning the circumferential electronic tag proximate an undercut slot formed in an inner wall of the tubular member; and
inserting the circumferential electronic tag into the undercut slot by deforming the circumferential electronic tag, wherein the electronic tag is adapted to return to a substantially undeformed state within the undercut slot after insertion therein.

83. The method of claim 82, further comprising filling the undercut slot with a potting material after positioning the electronic tag therein.

84. A method of positioning an electronic tag in a tubular member, the method comprising:
positioning the electronic tag proximate a circumferential slot formed in an inner wall of the tubular member; and
radially expanding a diameter of a circumferential mounting ring coupled to the electronic tag so as to secure the electronic tag in the slot.

85. The method of claim 84, further comprising filling the slot with a potting material after positioning the electronic tag therein.

86. A method of positioning an electronic tag in a tubular member, the method comprising:
positioning the electronic tag proximate a circumferential undercut slot formed in an inner wall of the tubular member; and
radially expanding a diameter of a circumferential installation ring coupled to the electronic tag so as to secure the electronic tag in the slot.

87. The method of claim 86, further comprising filling the undercut slot with a potting material after positioning the electronic tag therein.

88. A method of positioning a circumferential electronic tag in a tubular member, the method comprising:
compressing a biased tab disposed on the circumferential electronic tag;
positioning the electronic tag in a circumferential undercut slot formed in an inner wall of the tubular member; and
releasing the biased tab so as to secure the electronic tag in the undercut slot.

89. The method of claim 88, further comprising filling the undercut slot with a potting material.

90. A method of positioning a circumferential electronic tag in a tubular member, the method comprising:
positioning the circumferential electronic tag in a circumferential slot formed in an inner wall of the tubular member, the circumferential slot comprising at least one tab formed proximate the inner wall of the tubular member; and
deforming the at least one tab so as to secure the electronic tag in the slot.

91. The method of claim 90, further comprising filling the slot with a potting material.

92. An electronic tag apparatus, comprising:
a slot formed at a selected azimuthal location in an inner wall of a tubular member;
an electronic tag disposed in the slot; and
a potting material disposed in the slot, the potting material adapted to form a barrier between the electronic tag and the inner wall of the tubular member and to adhesively bond the electronic tag to the slot.

93. The apparatus of claim 92, further comprising a cover adapted to be positioned in the slot and to cover at least a portion of the electronic tag.

94. The apparatus of claim 93, wherein the cover comprises a flange adapted to mechanically secure the cover in the slot.

95. An electronic tag apparatus, comprising:
a plurality of slots formed at selected azimuthal and axial locations in an inner wall of a tubular member;
an electronic tag disposed in each slot; and
a potting material disposed in the plurality of slots, the potting material adapted to form a barrier between each electronic tag and the inner wall of the tubular member and to adhesively bond each electronic tag to its corresponding slot.

96. An electronic tag apparatus, comprising:
a circumferential undercut slot formed in an inner wall of a tubular member;
an electronic tag disposed in the undercut slot; and
a potting material disposed in the undercut slot, the potting material adapted to form a barrier between the electronic tag and the inner wall of the tubular member and to adhesively bond the electronic tag to the slot.

97. The apparatus of claim 96, wherein the electronic tag comprises a flexible metal installation ring adapted to deform when being inserted into the slot and to return to a substantially undeformed shape after insertion.

98. The apparatus of claim 96, wherein the electronic tag comprises a flexible polytetrafluoroethylene installation ring adapted to deform when being inserted into the slot and to return to a substantially undeformed shape after insertion.

99. The apparatus of claim 96, wherein the electronic tag comprises a flexible epoxy installation ring adapted to deform when being inserted into the slot and to return to a substantially undeformed shape after insertion.

100. The apparatus of claim 96, wherein the electronic tag comprises a ratchet installation ring adapted to radially expand so as to fit within the circumferential slot.

101. The apparatus of claim 96, wherein the electronic tag comprises biased tabs formed thereon, the tabs adapted to compress so the electronic tag can be inserted in the slot and to release into a securing position after insertion.

102. An electronic tag apparatus, comprising:
a circumferential slot formed in an inner wall of a tubular member; and
an electronic tag coupled to a circumferential ring, the circumferential ring disposed in the undercut slot and adapted to secure the electronic tag in place.

103. The apparatus of claim 102, wherein the circumferential ring comprises a flexible metal installation ring adapted to deform when being inserted into the slot and to return to a substantially undeformed shape after insertion.

104. The apparatus of claim 102, wherein the circumferential ring comprises a ratchet installation ring adapted to radially expand so as to fit within the circumferential slot.

105. The apparatus of claim 102, wherein the circumferential ring comprises biased tabs formed thereon, the tabs adapted to compress so the circumferential ring can be inserted in the slot and to release into a securing position after insertion.

106. The apparatus of claim 102, wherein the circumferential ring comprises a polymer material.

107. The apparatus of claim 102, wherein the circumferential ring comprises a ceramic material.

108. The apparatus of claim 102, wherein the circumferential ring comprises an epoxy.

109. The apparatus of claim 102, wherein the circumferential ring comprises ridges formed on an outer surface thereof, the ridges adapted to axially secure the circumferential ring in place in the circumferential slot.

110. The apparatus of claim 102, wherein the circumferential ring comprises a split ring.

111. An electronic tag apparatus, comprising:
a first casing joint comprising threads formed on an outer surface thereof;
a second casing joint comprising threads formed on an outer surface thereof;
a casing collar comprising threads formed on an inner surface thereof, the casing collar threadedly connected to the first casing joint and the second casing joint; and
a threaded ring comprising an electronic tag and threads formed on an outer surface thereof, the threaded ring threadedly connected to the casing collar and positioned between the first and second casing joints.

112. The apparatus of claim 111, wherein the threaded ring comprises a split ring.

113. An electronic tag apparatus, comprising:
a first tubular member comprising a circumferential slot formed proximate an end thereof;
an electronic tag coupled to a circumferential ring, the circumferential ring disposed in the circumferential slot; and
a second tubular member positioned adjacent to the first tubular member proximate the slotted end so as to axially restrain the circumferential ring in the circumferential slot.

114. The apparatus of claim 113, wherein the circumferential ring comprises a flexible metal ring adapted to deform when being inserted into the slot and to return to a substantially undeformed shape after insertion.

115. The apparatus of claim 113, wherein the circumferential ring comprises a flexible polytetrafluoroethylene ring adapted to deform when being inserted into the slot and to return to a substantially undeformed shape after insertion.

116. The apparatus of claim 113, wherein the circumferential ring comprises a flexible epoxy ring adapted to deform when being inserted into the slot and to return to a substantially undeformed shape after insertion.

117. The apparatus of claim 113, wherein the circumferential ring comprises a ratchet ring adapted to radially expand so as to fit within the circumferential slot.

118. The apparatus of claim 113, wherein the circumferential ring comprises a polymer material.

119. The apparatus of claim 113, wherein the circumferential ring comprises a ceramic material.

120. The apparatus of claim 113, wherein the circumferential ring comprises an epoxy.

121. The apparatus of claim 113, wherein the circumferential ring comprises ridges formed on an outer surface thereof, the ridges adapted to axially secure the circumferential ring in place in the circumferential slot.

122. The apparatus of claim 113, wherein the circumferential ring comprises a split ring.

123. An electronic tag apparatus, comprising:
a first tubular member comprising a slot formed proximate an end thereof, the slot forming an opening in an inner surface of the tubular member;
an electronic tag disposed in the slot; and
a second tubular member positioned adjacent to the first tubular member proximate the slotted end so as to axially restrain the electronic tag in the slot.

124. The apparatus of claim 123, wherein the slot is filled with a potting material after the electronic tag is disposed therein.

125. An electronic tag apparatus, comprising:
first and second tubular members disposed in a wellbore;
a collar disposed between the first and second tubular members; and
a circumferential ring comprising an electronic tag coupled thereto, the circumferential ring disposed proximate a circumferential slot formed in an inner surface of the collar.

126. The apparatus of claim 125, wherein the circumferential ring comprises a flexible metal ring adapted to deform when being inserted into the slot and to return to a substantially undeformed shape after insertion.

127. The apparatus of claim 125, wherein the circumferential ring comprises a flexible polytetrafluoroethylene ring adapted to deform when being inserted into the slot and to return to a substantially undeformed shape after insertion.

128. The apparatus of claim 125, wherein the circumferential ring comprises a flexible epoxy ring adapted to deform when being inserted into the slot and to return to a substantially undeformed shape after insertion.

129. The apparatus of claim 125, wherein the circumferential ring comprises a ratchet ring adapted to radially expand so as to fit within the circumferential slot.

130. The apparatus of claim 125, wherein the circumferential ring comprises a polymer material.

131. The apparatus of claim 125, wherein the circumferential ring comprises a ceramic material.

132. The apparatus of claim 125, wherein the circumferential ring comprises an epoxy.

133. The apparatus of claim 125, wherein the circumferential ring comprises ridges formed on an outer surface thereof, the ridges adapted to axially secure the circumferential ring in place in the circumferential slot.

134. The apparatus of claim 125, wherein the circumferential ring comprises a split ring.

135. An electronic tag apparatus comprising:
a tubular member;
an electronic tag disposed in the tubular member; and
a signal boosting apparatus disposed in the tubular member proximate the electronic tag.

136. The apparatus of claim 135, wherein the signal boosting apparatus comprises a wire loop and the electronic tag is disposed inside the wire loop.

137. The apparatus of claim 135, wherein the signal boosting apparatus comprises a wire loop and the electronic tag is disposed outside the wire loop.

138. The apparatus of claim 135, wherein the signal boosting apparatus comprises a wire loop, and at least a portion of the wire loop is wound around a core.

139. The apparatus of claim 138, wherein the core comprises ferrite.

140. The apparatus of claim 138, wherein the portion the wire loop wound around the core forms a spring so that the signal boosting device may be deformed so as to install the signal boosting device in the tubular member.

141. The apparatus of claim 135, further comprising an installation ring, wherein the electronic tag and the signal boosting apparatus are disposed in slots formed in the installation ring, and the installation ring is adapted to be disposed in the tubular member.

142. The apparatus of claim 135, wherein the electronic tag is coupled to the signal boosting apparatus.

143. The apparatus of claim 142, wherein the electronic tag is formed as a disk and is coupled to an exterior surface of a metal ring comprising the signal boosting apparatus.
